# EUROPÄISCHE PATENTSCHRIFT

(11) **EP 1 954 513 B1**
(45) Veröffentlichungstag und Bekanntmachung des Hinweises auf die Patenterteilung: **18.08.2010**
(21) Anmeldenummer: 07820679.4
(22) Anmeldetag: 28.09.2007
(51) Int. Cl.: B60J 1/20

(54) **FAHRZEUGROLLO**
BLINDS FOR VEHICLES
STORE DEROULANT POUR VEHICULE

(30) Priorität: 29.09.2006 DE 102006047359; 05.12.2006 DE 102006058360
(43) Veröffentlichungstag der Anmeldung: 13.08.2008
(73) Patentinhaber: Brose Fahrzeugteile GmbH & Co. KG, Coburg, 96450 Coburg (DE)
(72) Erfinder: KRIESE, Olaf, 96450 Coburg (DE); SCHULZ, Markus, 90425 Nürnberg (DE)
(74) Vertreter: Ninnemann, Detlef
(86) Internationale Anmeldenummer: PCT/EP2007/060292
(87) Internationale Veröffentlichungsnummer: WO 2008/037785

(56) Entgegenhaltungen:
- EP-A- 1 123 824
- DE-U1- 20 112 948
- DE-U1-202004 014 652
- US-A- 4 850 084

## Beschreibung

Die Erfindung betrifft ein Fahrzeugrollo, insbesondere ein Sonnenschutzrollo für Kraftfahrzeuge, gemäß dem Oberbegriff des Anspruchs 1.

### Stand der Technik

Aus der EP 1 123 824 A2 ist ein Sonnenschutzrollo für ein Kraftfahrzeug bekannt, das eine drehbar gelagerte Wickelwelle aufweist, die zwischen dem Türinnenblech und der Türinnenverkleidung auf der Trockenraumseite einer Kraftfahrzeugtür ungeordnet ist. Auf der Wickelwelle ist eine Rollobahn bzw. ein Rollobehang aufgewickelt, dessen Zuschnitt der Form des Seitenfensters der Kraftfahrzeugtür entspricht und einen umlaufenden Rand aufweist, der einen an der Wickelwelle befestigten Abschnitt sowie einen Abschnitt enthält, der mittels eines mit einem Antriebsmittel verbundenen Betätigungsmittels durch einen Schlitz in der Türbrüstung und Türinnenverkleidung gezogen und in gleicher Bewegungsrichtung wie die Bewegungsrichtung des beweglichen Seitenfensters von unten nach oben, d. h. von der unteren, an den Türkasten der Kraftfahrzeugtür angrenzenden und im Wesentlichen horizontal verlaufenden Fensterrahmenkante zur oberen Fensterrahmenkante von der Wickelwelle abgezogen wird.

Das Betätigungsmittel zum Abziehen des Rollobehangs von der Wickelwelle besteht aus unterhalb der Wickelwelle an der Kraftfahrzeugtür im Abstand zueinander angeordneten Gleitführungsblöcken, aus denen nach oben ein drucksteifes und verhältnismäßig biegesteifes zylindrisches Betätigungsglied austritt, deren untere Enden durch Führungsrohre von den Gleitführungsblöcken zu einem Antriebsmotor und in dessen Getriebe laufen und synchron zueinander angetrieben werden. Beim Ausfahren der Betätigungsglieder aus den Führungsrohren drücken die Betätigungsglieder einen mit dem von der Wickelwelle entfernten oberen Rand des Rollobehangs verbundenen Rollozugstab oder "Spriegel" nach oben und wickeln dadurch gegen die Wirkung einer Rückstell-Drehfeder in der Wickelwelle den Rollobehang von der Wickelwelle ab. Im vollständig oder teilweise von der Wickelwelle abgezogenen Zustand wird der Rollobehang durch die Krafteinwirkung der Betätigungsglieder auf den Rollozugstab und die mit der Wickelwelle verbundene Drehfeder gespannt und dadurch straff gehalten.

Die Konstruktion des Verstellmechanismus des bekannten Rollos macht es erforderlich, den Verstellmechanismus auf der Trockenraumseite einer Kraftfahrzeugtür anzuordnen da die Führungsrohre zur Aufnahme der Betätigungsglieder ausschließlich deren Führung dienen und die die Betätigungsglieder antreibende Antriebseinrichtung mit einem Elektromotor eine trockenraumseitige Anordnung bedingt.

Die DE 20 2004 014652 U1 zeigt ein ähnliches Rollo.

### Aufgabe, Lösung, Vorteile

Der vorliegenden Erfindung liegt die Aufgabenstellung zugrunde, ein Fahrzeugrollo anzugeben, dessen Verstelleinrichtung kompakt ausgebildet und variabel einsetzbar ist.

Diese Aufgabe wird erfindungsgemäß durch die Merkmale des Anspruchs 1 gelöst.

Die erfindungsgemäße Lösung ermöglicht einen kompakten Aufbau der Verstelleinrichtung für ein Fahrzeugrollo und deren variablen Einsatz.

Der kompakte Aufbau und variable Einsatz der erfindungsgemäßen Verstelleinrichtung für ein Fahrzeugrollo, insbesondere für ein Kraffahrzeugrollo, ergibt sich aus der Ausgestaltung der Verstelleinrichtung nach Art eines einsträngigen Seilfensterhebers und deren zumindest teilweiser Kapselung sowie der ebenfalls zumindest teilweisen Kapselung des durch die Verstelleinrichtung angetriebenen Schubelements, so dass die Verstelleinrichtung an beliebigen Orten in einer Fahrzeugkarosserie oder Fahrzeugtür und damit problemlos auch auf der Nassraumseite einer Fahrzeugtür angeordnet werden kann. Durch die Schaffung von Schnittstellen zwischen den einzelnen Verstellmitteln der Verstelleinrichtung wird ein modularer Aufbau ermöglicht, so dass durch eine in weiten Grenzen frei wählbare Gestaltung der Verstellmittel eine Kombination mit anderen Elementen in einer Fahrzeugtür oder Fahrzeugkarosserie, insbesondere mit einem Fensterheber zum Anheben und Absenken einer Fensterscheibe einer Kraftfahrzeugtür, ermöglicht wird.

Die erfindungsgemäße Lösung ist für Fahrzeug- oder insbesondere Kraftfahrzeugrollos jedweder Art, wie Sonnenschutzrollos für Fensterscheiben, transparente Fahrzeugdecken, Schiebedächer, für Laderaumabdeckungen und Raumteilungen zwischen Front- und Fondsitzen sowie zwischen Fahrgastraum und Gepäckraum einsetzbar und eignet sich sowohl für einen Einbau in eine Fahrzeugkarosserie oder konventionelle Fahrzeugtür als auch vormontiert auf einem Türmodul bzw. zur Montage auf eine Grundplatte oder ein Türinnenblech einer Fahrzeugtür.

Zur Ausbildung der Verstelleinrichtung nach Art eines einsträngigen Seilfensterhebers und gekapselten Anordnung zusammen mit dem Schubelement enthält die Verstelleinrichtung ein flexibles Zugmittel zur Kraftübertragung auf das Schubelement, ein mit einem Rolloantrieb verbundenes Zugmittel-Antriebselement, das das flexible Zugmittel in einer das Anheben oder Absenken des Schubelements bewirkenden Richtung verstellt und eine Zugmittelumlenkung an mindestens einem Ende des Verstellweges des Schubelements, auf dem ein Abschnitt des flexiblen Zugmittels geführt ist.

Die zumindest teilweise gekapselte Anordnung des Schubelements und der Verstelleinrichtung wird durch ein das Schubelement und die Verstelleinrichtung aufnehmendes Gehäuse realisiert, das für die Möglichkeit einer Modulbauweise ein Antriebsgehäuse, das einen Rolloantrieb der Verstelleinrichtung umgibt, und einen vorzugsweise rohrförmigen Führungskanal aufweist, der das Schubelement und ein mit dem Schubelement und dem Rolloantrieb verbundenes flexibles Zugmittel aufnimmt.

Die erfindungsgemäße Lösung schließt sämtliche Varianten von einer vollständigen Kapselung der Verstelleinrichtung und des Schubelements bis hin zu einem zumindest teilweise offenen Führungskanal ein, der zumindest über einen Teil seines Umfangs und seiner Länge insbesondere geschlitzt ist. Bei vollständiger Kapselung schottet das Gehäuse die Verstelleinrichtung und das Schubelement staub- und feuchtigkeitsdicht ab, so dass die so gekapselten Teile, nämlich die Verstelleinrichtung und das Schubelement, eines Fahrzeugrollos in Nass- und Trockenraumbereichen einer Fahrzeugkarosserie bzw. einer Fahrzeugtür eingesetzt werden können.

Die Modulbauweise der Verstelleinrichtung kann insbesondere dadurch realisiert werden, dass das Antriebsgehäuse das Zugmittel-Antriebselement enthält, die Zugmittelumlenkung in einem Zugmittel-Umlenkgehäuse angeordnet ist und eine feuchtigkeits- und staubdichte, vorzugsweise als Steckverbindung ausgebildete Verbindung des Antriebsgehäuses und des Zugmittel-Umlerikgehäuses mit dem Führungskanal vorgesehen ist.

Durch die insbesondere steckbare Verbindung der Module Antriebsgehäuse, Führungskanal und Zugmittelumlenkung ist ein variabler Aufbau mit beispielsweise gleichem Rolloantrieb und gleicher Zugmittelumlenkung bei unterschiedlichen Längen des Führungskanals für unterschiedliche Größen einer Fahrzeugtür und deren Fensterausschnitt gewährleistet und eine einfache, sichere Montage für eine staub- und feuchtigkeitsdichte Anordnung der Funktionsteile der Verstelleinrichtung in einem diese kapselnden Gehäuse sichergestellt. Dabei kann das Antriebsgehäuse als Kopfteil der Verstelleinrichtung mit Lagerstellen für den Rolloantrieb und das Zugmittel-Antriebselement, Befestigungsstellen zur Befestigung des Kopfteils mit der Karosserie oder einer Montageplatte und eine Führung für das Zugelement ausbilden und damit Mehrfachfunktionen erfüllen.

Alternativ kann das Zugmittel unmittelbar im Führungskanal umgelenkt werden, so dass anstelle eines Zugmittel-Umlenkgehäuses ein Verschlussdeckel vorgesehen ist, der das der Zugmittelumlenkung benachbarte Ende des Führungskanals verschließt. Zur Abdichtung des Verschlussdeckels kann eine Dichtung, insbesondere eine 0-Ring-Dichtung vorgesehen werden.

Das untere Ende des druck- und/oder biegesteifen Schubelements kann unmittelbar mit dem flexiblen Zugmittel der Verstelleinrichtung oder mit einem Rollo-Mitnehmer verbunden werden, der über das flexible Zugmittel angetrieben wird und innerhalb des Führungskanals senkrecht zu seiner Bewegungsrichtung formschlüssig geführt wird.

Während sich die unmittelbare Verbindung des Schubelements mit dem flexibles Zugmittel für kleinformatige Rollobehänge eignet und kostengünstig ist, ermöglicht die Kopplung des Schubelements mit einem innerhalb des Führungskanals formschlüssig geführten Rollo-Mitnehmers eine exakte, im Wesentlichen spielfreie Führung des Schubelements und damit einen korrekten Abzug des Rollobehangs von der Wickelwelle auch bei großformatigen Rollobehängen.

Um das flexible Zugmittel auch bei einer Längenänderung infolge der auf das flexible Zugmittel einwirkenden Zugspannungen straff zu halten und damit eine exakte Führung des flexiblen Zugmittels in dem Zugmittel-Antriebselement und der Zugmittelumlenkung zu gewährleisten und Kollisionen mit dem Schubelement zu vermeiden, weist der Rollo-Mitnehmer eine Einrichtung zum Nachstellen des flexiblen Zugmittels auf und/oder ist das Zugmittel-Antriebselement bzw. die Zugmittelumlenkung über eine Zugmittel-Spannvorrichtung mit dem Führungskanal verbunden.

Die in dem Rollo-Mitnehmer vorgesehene Einrichtung zum Nachstellen des flexiblen Zugmittels weist vorzugsweise zwei gegeneinander in der Bewegungsrichtung des Rollo-Mitnehmers verstellbare Mitnehmerelemente auf, die jeweils mit einem Ende des flexiblen Zugmittels verbunden und mittels einer Druckfeder gegeneinander verspannt sind.

Diese Einrichtung zum Nachstellen des flexiblen Zugmittels eignet sich insbesondere für eine offene, keinen geschlossenen Ring bildende Ausführung des flexiblen Zugmittels, dessen Enden über den Rollo-Mitnehmer miteinander verbunden werden. Dagegen eignet sich die Anordnung einer Zugmittel-Spannvorrichtung und deren Verbindung mit dem Zugmittel-Antriebselement und/oder der Zugmittelumlenkung für ein flexibles Zugmittel, das einen geschlossenen Ring bildet. Diese Zugmittel-Spannvorrichtung besteht vorzugsweise aus einem mit der Zugmittelumlenkung verbundenen und sich über eine Spannfeder am Verschlussdeckel abstützenden Spannhebel.

Zur Sicherung der Verbindung des flexiblen Zugmittels mit dem Rollo-Mitnehmer können in einer bevorzugten Ausführungsform in dem Rollo-Mitnehmer Formschlusselemente vorgesehen werden, die mit Gegen-Formschlusselementen des flexiblen Zugmittels verbunden sind. Diese Gegen-Formschlusselemente des flexiblen Zugmittels können an der Stelle der Verbindung des flexiblen Zugmittels mit dem Rollo-Mitnehmer beispielsweise durch Einprägen in das flexible Zugmittel angeordnet werden oder insbesondere für ein insgesamt mit Formschlusselementen versehenes flexibles Zugelement vorgesehen werden, das beispielsweise aus einem Zahnriemen, Lochriemen, Reibriemen oder einer Kette besteht.

Zur staub- und feuchtigkeitsdichten Kapselung des Schubelements verläuft der Führungskanal von einer mit der Fahrzeugkarosserie verbundenen unteren Anlenkung bis zu einer Nass/Trockenraumtrennung der Fahrzeugkarosserie.

Diese weitestgehende Kapselung des Schubelements außerhalb des Abzugsweges des Rollobehangs von der Wickelwelle zur oberen Fensterrahmenkante gewährleistet neben der Möglichkeit einer nassraumseitigen Anordnung der Verstelleinrichtung des Rollos eine wesentliche Verminderung der Gefahr einer Verschmutzung des Schubelements. Da das Schubelement zwischen der Fensterscheibe und dem Rollobehang angeordnet ist und wegen der gleichzeitigen Verstellung der Fensterscheibe und des Rollobehangs bzw. der Kopplung der Verstellung des Rollobehangs mit dem Schließzustand der Fensterscheibe zum Schutz des Rollobehangs vor einer insbesondere durch Fahrtwind verursachten Zerstörung für den Benutzer nicht zugänglich ist, kann ein verschmutztes Schubelement nicht gereinigt werden und würde zwangsläufig zu einer Verschmutzung des Rollobehangs führen.

Vorzugsweise besteht der Führungskanal aus einem das Schubelement aufnehmenden oberen Führungsrohr, das vom Antriebsgehäuse oder der Zugmittelumlenkung bis zur Nass/Trockenraumtrennung der Fahrzeugkarosserie verläuft, und einem das Schubelement, den Rollo-Mitnehmer und das flexible Zugmittel aufnehmenden unteren Führungsrohr, das vom Antriebsgehäuse oder der Zugmittelumlenkung bis zur unteren Anlenkung der Verstelleinrichtung an der Fahrzeugkarosserie verläuft

Der modulare Aufbau der Verstelleinrichtung des Rollos ermöglicht es, entweder das Zugmittel-Antriebselement zwischen dem oberen und unteren Führungsrohr und die Zugmittelumlenkung am unteren Ende des unteren Führungsrohres oder umgekehrt das Zugmittel-Antriebselement am unteren Ende des unteren Führungsrohres und die Zugmittelumlenkung zwischen dem oberen und dem unteren Führungsrohr anzuordnen, wobei bei beiden Anordnungen des Zugmittel-Antriebselement und der Zugmittelumlenkung der Rolloantrieb senkrecht oder parallel zum unteren Führungsrohr angeordnet werden kann.

Die Modulbauweise der Verstelleinrichtung ermöglicht weiterhin beliebige Querschnittsformen des Führungskanals bzw. des unteren und/oder oberen Führungsrohres, da die Führungsrohre mit einem dem jeweiligen Verwendungszweck entsprechenden Rolloantrieb und einer Seilumlenkung vorzugsweise mittels einer Steckverbindung verbunden werden. Dies ermöglicht die Herstellung extrudierter Führungsrohre, deren Querschnitt kreis- oder ellipsenförmig bzw. quadratisch oder rechteckförmig ausgebildet ist. In der letztgenannten Ausführungsform ist zusätzlich eine Frontseite des quadratischen oder rechteckförmigen unteren Führungsrohres klapp- und verrastbar ausgebildet.

Zur Festlegung der Verstelleinrichtung an einer Grundplatte, Montageplatte oder am Türinnenblech einer Fahrzeugtür weist das Antriebsgehäuse Befestigungselemente und das Zugmittel-Antriebselement und/oder die Zugmittelumlenkung eine im Mittelpunkt des Zugmittel-Antriebselements und/oder der Zugmittelumlenkung angeordnete Bohrung auf, während das vom unteren Führungsrohr entfernte obere Ende des oberen Führungsrohres vorzugsweise durch eine dem Querschnitt des oberen Führungsrohres angepasste, feuchtigkeitsdichte Rohrdurchführung in der Nass/Trockenraumtrennung der Fahrzeugkarosserie bzw. Fahrzeugtür gesteckt ist.

Eine weitere, vorteilhafte Ausgestaltung der Erfindung besteht in einer Integration von Teilen eines in einer Fahrzeugtür angeordneten Fensterhebers in Teile der Verstelleinrichtung des Rollos, insbesondere in einer ein- oder zweiteiligen Verbindung des unteren Führungsrohres bzw. des Führungskanals der Verstelleinrichtung des Rollos mit einer Führungsschiene des Fensterhebers.

Durch die Integration des Fensterhebers in das Rollo wird ein Synergieeffekt erzielt, der eine Platz sparende Anordnung des Fensterhebers und Rollos ermöglicht, eine erhöhte Stabilität der sich wechselseitig stützenden Verstelleinrichtungen des Rollos und des Fensterhebers gewährleistet und eine optimal aufeinander abgestimmte Anordnung der Antriebseinrichtungen bis hin zur Verwendung eines gemeinsamen Antriebs ermöglicht.

Insbesondere bei einer einteiligen Verbindung des unteren Führungsrohres bzw. des Führungskanals mit einer Führungsschiene des Fensterhebers wird eine erhöhte Steifigkeit bei minimalem Volumen und damit Gewicht bzw. Raumbedarf erzielt und infolge der dicht benachbarten Antriebsmittel die gemeinsame Verwendung von Antriebsmitteln ermöglicht.

In einer bevorzugten Ausführungsform ist das untere Führungsrohr des Führungskanals als Führungsschiene des Fensterhebers ausgebildet und ermöglicht in weiterer Ausgestaltung, dass ein Fensterheber-Mitnehmer beispielsweise eines Seilfensterhebers an der Außenkontur des unteren Führungsrohres geführt wird.

In dieser Ausführungsform der erfindungsgemäßen Lösung wird die Führungsschiene des Fensterhebers durch den Führungskanal bzw. das untere Führungsrohr ersetzt, so dass der Führungskanal der Verstelleinrichtung des Rollos entweder zur Kapselung und Führung des Schubelements, des flexiblen Zugmittels und gegebenenfalls des Mitnehmers der Verstelleinrichtung für das Rollo oder zusätzlich zur Führung eines Fensterheber-Mitnehmers oder bei einem Verzicht auf ein Rollo ausschließlich als Führungsschiene für den Fensterheber-Mitnehmer eingesetzt werden kann. Durch diese universelle Einsetzbarkeit des Führungskanals kann auf die Bereithaltung und Bereitstellung unterschiedlicher Verstellteile für ein Rollo und einen Fensterheber verzichtet werden, so dass die Herstellungs- und Montagekosten minimiert werden.

Alternativ können das untere Führungsrohr und die Führungsschiene des Fensterhebers zweiteilig ausgebildet und parallel zueinander verlaufend nebeneinander angeordnet werden.

Zur weiteren Vereinfachung der Montage und Herabsetzung der Herstellungskosten durch einen Synergieeffekt werden die Verstelleinrichtung für das Rollo und der Fensterheber zum Anheben und Absenken einer Fensterscheibe auf einer gemeinsamen Grundplatte angeordnet und weisen gemeinsame Umlenkeinrichtungen auf.

Zusätzlich kann der Fensterheberantrieb am unteren Ende des mit seiner Außenkontur als Führungsschiene dienenden Führungskanals angeordnet werden und eine Fensterheber-Seiltrommel die untere Umlenkung für das Fensterheberseil bilden, während eine obere Fensterheber-Seilumlenkung entweder als Teil des Rolloantriebs ausgebildet wird oder in das Antriebsgehäuse des Rolloantriebs eingesteckt ist.

Alternativ bildet die Fensterheber-Seiltrommel die obere Fensterheber-Seilumlenkung bildet und der Elektromotor des Fensterheberantriebs ist zum unteren Ende des Führungskanals bzw. unteren Führungsrohrs ausgerichtet.

Ein maximaler Synergieeffekt ist durch einen Elektromotor und ein Umschaltgetriebe zu erreichen, die sowohl für den Antrieb der Verstelleinrichtung des Rollos als auch für den Fensterheberantrieb vorgesehen und entweder mit der Verstelleinrichtung des Rollos oder mit dem Fensterheber zum Antrieb einer Fensterheber-Seiltrommel gekoppelt werden.

Das flexible Zugmittel kann in einer ersten Variante aus einem Rolloseil bestehen, das als Stahlseil oder in bevorzugter Ausführungsform als kunststoffummanteltes Stahlseil oder Kunststoffseil ausgebildet ist, wobei die beiden letztgenannten Ausführungsformen eine geringe Reibung gewährleisten und kleinere Wickel- bzw. Umlenkradien ohne die Gefahr eines Seilbruches ermöglichen.

In weiterer Ausgestaltung dieser erfindungsgemäßen Lösung mit einem Rolloseil sind im unteren Führungsrohr in dessen Längsrichtung verlaufende Stege oder Rippen angeordnet, die das Schubelement von den Seilsträngen'des Rolloseils trennen und einen Teil der formschlüssigen Führung des Rollo-Mitnehmers ausbilden.

Durch die Trennung des Schubelements von den üblicherweise gefetteten Seilsträngen des Rolloseils wird eine Übertragung von Fett- und Schmutzpartikeln auf das Schubelement verhindert, was zu einer Verschmutzung des Rollobehangs führen könnte und wegen der vorstehend dargelegten Problematik bei der Zugänglichkeit des Schubelements die Notwendigkeit eines Eingriffs durch Fachleute entbehrlich macht. Durch die zusätzliche Führung des Mitnehmers wird die Gefahr eines Verkantens des Mitnehmers innerhalb des Führungskanals bzw. des unteren Führungsrohrs vermieden und damit eine sichere Betriebsweise des Rollos gewährleistet.

Eine weitere Ausgestaltung der erfindungsgemäßen Lösung ist dadurch gekennzeichnet, dass die Rolloseiltrommel in einem spitzen Winkel zum unteren Führungsrohr angeordnet und das obere Führungsrohr in der Verlängerung des unteren Führungsrohres verlaufend ausgerichtet ist.

Diese Ausrichtung und Anordnung der Rolloseiltrommel und des oberen Führungsrohrs ermöglicht eine noch kompaktere Ausgestaltung der gekapselten Verstelleinrichtung und in weiterer Ausgestaltung einen einfach herstellbaren Rolloantrieb. Besteht der Rolloantrieb aus einem mit einer Antriebselektronik verbundenen Elektromotor und einem Getriebe mit einer Antriebsschnecke, die mit einem Schneckenrad der Rolloseiltrommel kämmt, so kann die Rolloseiltrommel derart gegenüber der Antriebsschnecke geneigt werden, dass das Schneckenrad geradverzahnbar und somit mit einfachen Werkzeugen herstellbar ist. Bei senkrecht zueinander angeordneten Achsen einer Antriebsschnecke und eines mit der Antriebsschnecke kämmenden Schneckenrades ist eine Schrägverzahnung des Schneckenrades unabdingbar, so dass bei einem entsprechenden Versatz der Achsen des Schneckenrades und der Antriebsschnecke eine Geradverzahnung des Schneckenrades ermöglicht wird, die erhebliche Herstellungsvorteile gegenüber einer Schrägverzahnung bietet.

Insbesondere bei aus Kunststoff hergestellten Führungskanälen oder Führungsrohren sind die verschiedenen, beliebig gestalteten und dem jeweiligen Verwendungszweck angepassten Querschnitte der Führungsrohre gegebenenfalls mit zusätzlichen Rippen und Stegen in ihrem Inneren zur Trennung des Schubelements von den Seilsträngen des Rolloseils durch Extrusion herstellbar, wobei eine klappbare Wand eines quadratischen oder rechteckförmigen unteren Führungsrohres einen einfachen Zugang bei der Montage eines Mitnehmers und Rolloseils ermöglicht.

Alternativ zu einem Rolloseil als flexiblem Zugelement für die Verstelleinrichtung des Rollos kann ein Zahnriemen, Lochriemen, Reibriemen, insbesondere ein Keilriemen, oder eine Kette, insbesondere eine Glieder- oder Kugelkette, vorgesehen werden.

Während ein Zahnriemen, Lochriemen und eine Kette eine formschlüssige Antriebsverbindung zwischen dem Rolloantrieb und dem flexiblen Zugmittel zum Verstellen des Zugelements ermöglichen und die Antriebsbewegung im Wesentlichen schlupffrei zum Verstellen des Schubelements übertragen, bietet ein insbesondere als Keilriemen ausgebildeter Reibriemen eine große Kraftübertragungsfläche an, die ein Durchrutschen und damit einen Schlupf zwischen dem Rolloantrieb und dem Schubelement unterbindet.

Ein an einen Zahnriemen, Lochriemen, Reibriemen oder eine Kette als flexibles Zugmittel angepasster Rolloantrieb weist einen mit einer Antriebselektronik verbundenen Elektromotor und ein Getriebe mit einer Antriebswelle auf, die mit einem als Antriebsritzel ausgebildeten Zugmittel-Antriebselement mit Formschlusselementen verbunden ist, die in die Gegen-Formschlusselemente des flexiblen Zugmittels eingreifen, während die Zugmittelumlenkung aus einer Umlenkrolle besteht, deren Achse senkrecht zur Bewegungsrichtung des flexiblen Zugmittels ausgerichtet ist und mit Formschlusselementen in die Gegen-Formschlusselemente des als Zahnriemen, Lochriemen, Reibriemen oder Kette ausgebildeten flexiblen Zugmittels eingreift.

Insbesondere das mit Formschlusselementen versehene flexible Zugmittel in Form eines Zahnriemens, Lochriemens oder einer Kette, ermöglicht sowohl eine offene als auch eine geschlossene Ausführungsform und dementsprechend eine Straffung mittels einer an der Zugmittelumlenkung angreifenden Zugmittelspannvorrichtung oder über eine in den Rollo-Mitnehmer integrierte Spannvorrichtung, die die Enden beispielsweise eines offenen Zahnriemens gegeneinander verspannt.

Die Integration von Teilen eines Fensterhebers in die nach Art eines einsträngigen Seilfensterhebers ausgebildete Verstelleinrichtung zum Verstellen eines Rollobehangs eines Fahrzeugrollos ermöglicht ein Baukastensystem, bei dem das Fahrzeugrollo und der Fensterheber Bestandteile des Baukastens sind, der eine Vorrichtung zum Verstellen einer Fensterscheibe eines Fensterhebers und/oder eines Rollobehangs eines Fahrzeugrollos bildet, das mit einem druck- und/oder biegesteifen und mit einer Verstelleinrichtung verbundenen Schubelement zum Aufspannen des Rollobehangs verbunden ist, wobei die Verstelleinrichtung nach Art eines einsträngigen Seilfensterhebers ausgebildet und zusammen mit dem Schubelement zumindest teilweise gekapselt ist und dass Teile des Fensterhebers in Teile der Verstelleinrichtung für das Fahrzeugrollo integrierbar sind.

Beide Bestandteile des Baukastens können sowohl getrennt als auch miteinander kombiniert verwendet werden, d. h. die Verstelleinrichtung kann zum Verstellen des Rollobehangs eines Fahrzeugrollos oder als Aufnahme und Führungseinrichtung für Teile des Fensterhebers eingesetzt werden.

Bei einer kombinierten Anwendung der Verstelleinrichtung sowohl für die Verstellung eines Rollobehangs eines Fahrzeugrollos als auch für die Verstellung einer Fensterscheibe eines Fensterhebers ist eine voneinander unabhängige Steuerung beider Systeme oder eine kombinierte Steuerung möglich, bei der beispielsweise das Schließen einer Fensterscheibe mit einem Abwickeln des Rollobehangs bzw. eine Öffnung einer Fensterscheibe mit einem Aufwickeln eines Rollobehangs verknüpft wird, so dass während der Fahrt eine Beschädigung des Rollobehangs durch Fahrtwind vermieden wird. Bei einer voneinander unabhängigen Steuerung des Fensterhebers und des Fahrzeugrollos kann gleichwohl eine Verriegelung zum Ausfahren des Rollobehangs bei teilweise und/oder vollständig geöffneter Fensterscheibe vorgesehen werden.

### Ausführungsbeispiele

In der Zeichnung sind verschiedene Ausführungsbeispiele der Erfindung dargestellt, die in unterschiedlichen Varianten weitere Einsatzmöglichkeiten der Erfindung zeigen, deren Aufbau und Vorteile nachstehend beschrieben werden. Es zeigen:
- Fig. 1: einen Längsschnitt durch eine Kraftfahrzeugtür mit einem Rollo und einer Verstelleinrichtung für das Rollo;
- Fig. 2: eine perspektivische Darstellung einer ersten Ausführungsform einer Verstelleinrichtung mit einem Rolloseil als flexiblem Zugmittel;
- Fig. 3: eine vergrößerte perspektivische Darstellung der Verbindung des An- triebsgehäuses der ersten Verstelleinrichtung mit einem Führungskanal oder Führungsrohr;
- Fig. 4 und 5: schematische Längsschnitte durch die Kraftfahrzeugtür mit darin ein- gebauter erster Verstelleinrichtung für ein Rollo bei unterschiedlich aus- gebildetem Türinnenblech;
- Fig. 6 bis 8: Front-, Seiten- und Rückseitenansichten der ersten Verstelleinrichtung bei unterschiedlicher Anordnung des Rolloantriebs;
- Fig. 9: eine Teilansicht auf das untere Ende des Führungskanals der ersten Verstelleinrichtung;
- Fig. 10: einen Schnitt durch den Führungskanal entlang der Linie X-X gemäß Fig. 9;
- Fig. 11: einen Schnitt durch den Führungskanal entlang der Linie XI-XI gemäß Fig. 9 im Bereich eines dort befindlichen Rollo-Mitnehmers;
- Fig. 12 bis 14: mehrere Varianten für die Querschnittsform des Führungskanals oder Führungsrohrs der ersten Verstelleinrichtung;
- Fig. 15 und 16: eine perspektivische Darstellungen aus verschiedenen Blickrichtungen eines in die erste Verstelleinrichtung für ein Rollo integrierten Seilfens- terhebers;
- Fig. 17 bis 19: Front-, Seiten- und Rückseitenansichten des in die erste Verstelleinrich- tung des Rollos integrierten Seilfensterhebers;
- Fig. 20: eine Draufsicht auf das untere Ende des Führungskanals der ersten Verstelleinrichtung für das Rollo mit darin geführtem Rollo-Mitnehmer der Verstelleinrichtung des Rollos und an der Außenkontur geführtem Fensterheber-Mitnehmer eines Seilfensterhebers;
- Fig. 21: einen Schnitt durch den Führungskanal entlang der Linie XXI-XXI ge- mäß Fig. 20 im Bereich eines dort befindlichen Fensterheber- Mitnehmers;
- Fig. 22: einen Schnitt durch den Führungskanal entlang der Linie XXII-XXII gemäß Fig. 20 im Bereich eines dort befindlichen Rollo-Mitnehmers;
- Fig. 23 bis 26: unterschiedliche Anordnungen und Ausgestaltungen des Fensterhe- berantriebs;
- Fig. 27 bis 29: schematische Schnitte bei zweiteiliger An- und Zuordnung der Fenster- heber-Führungsschiene und des Führungskanals des Rollos;
- Fig. 30 und 31: schematische Schnitte durch unterschiedliche Ausführungsformen ei- ner einteiligen Ausbildung der Fensterheber-Führungsschiene und des Führungskanals des Rollos;
- Fig. 32 bis 34: eine perspektivische Darstellung sowie eine Front- und Seitenansicht einer zweiten. Verstelleinrichtung mit einem formschlüssigen, flexiblen Zugmittel in Form eines Zahnriemens;
- Fig. 35: eine perspektivische Ansicht der Einzelteile der zweiten Verstelleinrich- tung;
- Fig. 36: eine vergrößerte perspektivische Darstellung der Verbindung des An- triebsgehäuses bzw. Kopfteils der zweiten Verstelleinrichtung mit einem Führungskanal oder Führungsrohr;
- Fig. 37: eine vergrößerte perspektivische Darstellung der Verbindung des Um- lenkgehäuses der zweiten Verstelleinrichtung mit einem Führungskanal oder Führungsrohr;
- Fig. 38: eine perspektivische und teilweise geschnittene Darstellung eines Rol- lo-Mitnehmers mit einer Längenkompensationseinrichturig für einen of- fenen Zahnriemen;
- Fig. 39: einen Längsschnitt durch den Rollo-Mitnehmer gemäß Fig. 38;
- Fig. 40 bis 42: eine Draufsicht, Seitenansicht und Rückseitenansicht eines Rollo- Mitnehmers mit Formschlusselementen zur Aufnahme eines Zahnrie- mens in geschlossener Riemenausführung;
- Fig. 43 und 44: eine perspektivische Ansicht und Seitenansicht des mit einem Zahn- riemen verbundenen Rollo-Mitnehmers gemäß den Figuren 40 bis 42;
- Fig. 45: einen schematischen Schnitt durch das untere Ende eines Führungs- rohres oder Führungskanals im Bereich der Zugmittelumlenkung mit ei- nem abgedichteten Verschlussdeckel und
- Fig. 46: einen schematischen Schnitt durch das untere Ende eines Führungs- rohres oder Führungskanals im Bereich der Zugmittelumlenkung mit ei- ner Zugmittel-Spannvorrichtung.

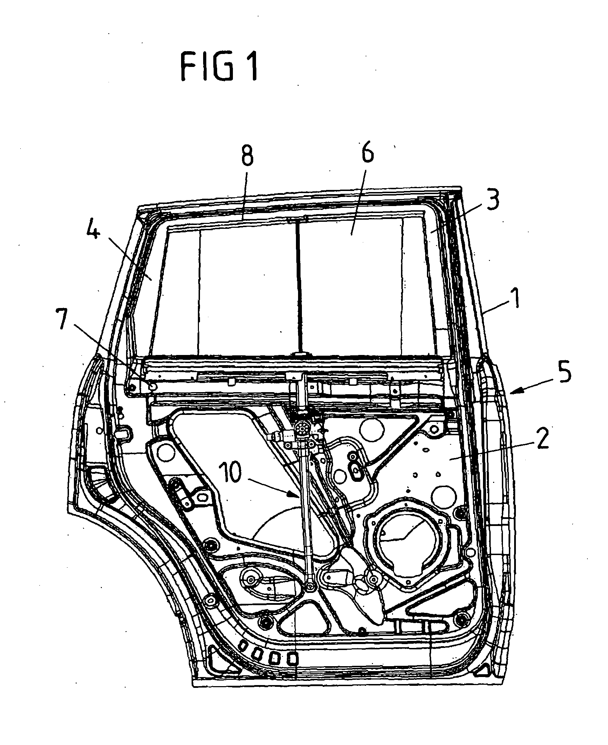

Fig. 1 zeigt einen Längsschnitt durch eine Kraftfahrzeugtür 1 mit einem Türschacht 2, der durch eine Türaußenhaut, ein Türinnenblech und eine in der Darstellung gemäß Fig. 1 zur Einsicht in den Türschacht abgenommene Türinnenverkleidung bestimmt ist, und mit einem Türausschnitt 3, der durch eine in Längsrichtung der Kraftfahrzeugtür 1 verstellbare Fensterscheibe 4 abgedeckt werden kann. Der Türausschnitt 3 ist durch eine umlaufende Fensterrahmenkante begrenzt, die sich aus einer oberen, einer seitlichen und einer unteren Fensterrahmenkante zusammensetzt. Zum Schutz des Fahrzeuginnenraums vor unerwünschter Erwärmung und zum Schutz der Fahrzeuginsassen vor einer Blendung durch schräg einfallende Sonnenstrahlen ist ein Rollo 5 vorgesehen, das eine Rollobahn bzw. einen Rollobehang 6 aufweist, dessen Kontur ungefähr der Kontur des Türausschnitts 3 angepasst ist, so dass bei vollständig ausgefahrenem Rollo 5 der Türausschnitt 3 bei geschlossener Fensterscheibe 4 im Wesentlichen abgedeckt wird.

Der Rollobehang 6 ist im eingezogenen Zustand auf einer Wickelwelle 7 aufgewickelt, die in einer an der oberen Türbrüstung des Türschachtes 2 angeordneten Rollokassette angeordnet ist. Der der Wickelwelle 7 entgegen gesetzte Rand des Rollobehangs 6 ist mit einem Rollozugstab oder "Spriegel" 8 verbunden, durch den der Rollobehang 6 üblicherweise gegen die Wirkung einer mit der Wickelwelle 7 verbundenen Drehfeder von der Wickelwelle 7 abgezogen wird, um den Türausschnitt 3 abzudecken.

Alternativ kann anstelle einer Wickelwelle nur ein Behälter bzw. eine Rollokassette vorgesehen werden, die den Rollobehang im nicht aufgespannten Zustand gefaltet aufnimmt. Dabei kann die Anordnung so gewählt werden, dass der Rollobehang nur in vollständig aus der Rollokassette herausgezogenem Zustand durch eine Befestigung des unteren und oberen Randes beispielsweise über eine Spannvorrichtung gestrafft wird.

Zum Abziehen des Rollobehangs von der Wickelwelle 7 oder zum Herausziehen des Rollobehangs 6 aus einer den in Falten gelegten Rollobehang 6 aufnehmenden Rollokassette ist der mit dem Rollozugstab 8 verbundene, der Wickelwelle 7 bzw. der Rollokassette gegenüberliegende Rand mit einem druck- und/oder biegesteifen Schubelement 9, üblicherweise in Form einer Schubstange, verbunden, die mittels einer Verstelleinrichtung in Längsrichtung der Kraftfahrzeugtür 1 verstellt wird.

Die Verstellung des Rollos 5 erfolgt zu dessen Schutz bzw. zum Schutz des Rollobehangs 6 vor Beschädigung oder Zerstörung durch Fahrtwind bei geöffneter Fensterscheibe 4 synchron zur bzw. in Abhängigkeit von der Stellung der Fensterscheibe 4, so dass das Rollo 5 nur dann von der Wickelwelle 7 abgezogen werden kann, wenn die Fensterscheibe 4 in gleichem Maße ausgefahren bzw. geschlossen ist. Vorzugsweise wird in einem so genannten "Automatiklauf' das Rollo nur vollständig aufgespannt oder vollständig eingezogen, wobei ein Aufspannen des Rollobehangs-6 nur bei vollständig geschlossener Fensterscheibe 4 freigegeben wird.

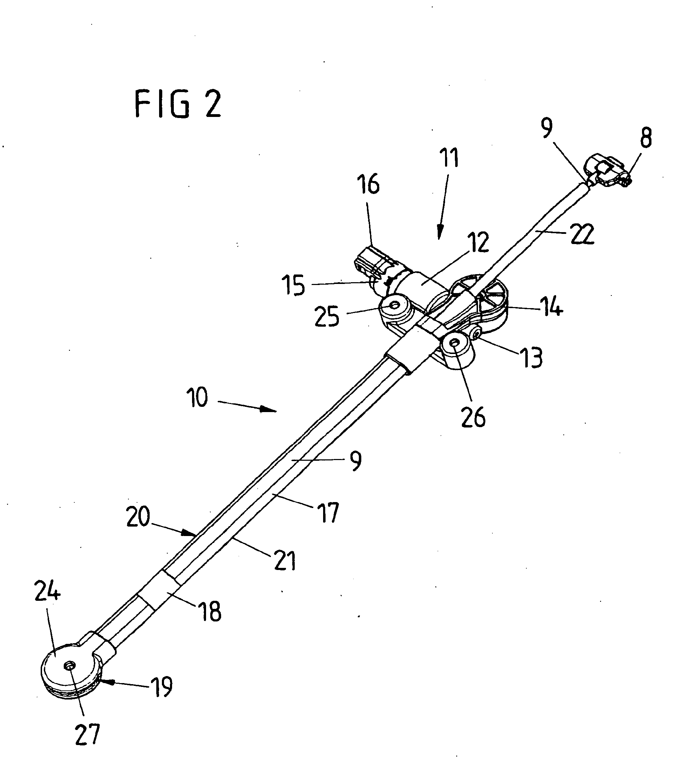

Die in Fig. 2 vergrößert dargestellte Verstelleinrichtung 10 für das Schubelement 9 ist nach Art eines einsträngigen Seilfensterhebers ausgebildet und weist einen elektromotorischen Rolloantrieb 11 auf, der einen Elektromotor 12, ein Getriebe 13 zum Antrieb einer Seiltrommel 14, eine Antriebselektronik 15 und einen Stecker 16 zum Anschluss des Rolloantriebs 11 an eine Steuer- und Regelelektronik des Kraftfahrzeugs bzw. der Kraftfahrzeugtür, insbesondere an ein Bussystem, enthält. Die Verstelleinrichtung 10 weist ferner einen vorzugsweise rohrförmigen Führungskanal 20 auf, der sich aus einem unteren Führungsrohr 21 und einem oberen Führungsrohr 22 zusammensetzt, die über staub- und wasserdichte Verbindungsstellen mit einem den Rolloantrieb 11 abkapselnden Antriebsgehäuse 23 verbunden sind.

In dem unteren Führungsrohr 21 verlaufen die Seilstränge 171, 172 eines auf die Seiltrommel 14 aufgewickelten Rolloseils 17, das mit einem Mitnehmer 18 verbunden ist und an dem dem Rolloantrieb 11 entgegengesetzten Ende des unteren Führungsrohrs 21 über eine Seilumlenkung 19 umgelenkt wird. Der Mitnehmer 18 ist mit dem Schubelement 9 verbunden, so dass bei Betätigung des Rolloantriebs 11 und dadurch bedingter Drehung der Seiltrommel 14 in der einen oder anderen Drehrichtung der Mitnehmer 18 zum Rolloantrieb 11 oder von diesem weg bewegt wird und damit die Stellung des Schubelements 9 verändert.

Alternativ ist ein zumindest teilweise offener Führungskanal 20 vorgesehen, der in bevorzugter Ausführungsform zumindest über einen Teil seines Umfangs und seiner Länge offen, vorzugsweise geschlitzt, ist. Eine derartige Ausgestaltung des Führungskanals 20 ermöglicht es beispielsweise, dass Teile eines zum Verstellen des Schubelements 9 im Führungskanal 20 angeordneten Mitnehmers 18 durch den Schlitz des Führungskanals 20 greifen und mit Zusatzteilen verbunden sind oder Endlagenschalter, Positionserfassungselemente oder dergleichen betätigen. Zur staub- und feuchtigkeitsdichten Abschottung kann in dieser Ausführungsform eine entsprechende Dichtung vorgesehen werden, die einen Durchgriff von Teilen der Verstelleinrichtung 10 durch den Führungskanal 20 ermöglicht und gleichwohl den Innenraum des Führungskanals 20 frei von Schmutzpartikeln und Feuchtigkeit hält.

Das Schubelement 9 ist in dem oberen Führungsrohr 22 ebenfalls gekapselt geführt und die Seilumlenkung 19 durch ein Seilumlenkgehäuse 24 gekapselt, wobei die Verbindung des Seilumlenkgehäuses 24 mit dem unteren Führungsrohr 21 bzw. mit dem Führungskanal 20 vorzugsweise über eine dichtende Steckaufnahme 231 ebenso staub- und wasserdicht ausgebildet ist wie die Verbindung des oberen Führungsrohres 22 mit dem Antriebsgehäuse 23 bzw. mit dem unteren Führungsrohr 21 vorzugsweise über eine dichtende Steckaufnahme 232. Die Länge des oberen Führungsrohres 22 bzw. des Führungskanals 20 ist so bemessen, dass das Schubelement 9 von seinem mit dem Rollozugstab 8 verbundenen Ende aus der Türinnenverkleidung bzw. Nass/Trockenraumtrennung der Fahrzeugkarosserie ragt.

Alternativ kann nur eine Kapselung des unteren Führungsrohres 21 vorgesehen werden, während das obere Führungsrohr 22 lediglich der Längsführung des Schubelements 9 dient. Das obere Führungsrohr 22 kann auch vollständig entfallen und es versteht sich, dass das obere Führungsrohr 22 auch in gekapselter Form das Schubelement 9 nur im eingefahrenen Zustand vollständig bis zur Querverbindung mit dem Rollozugstab 8 aufnimmt, während sich das nur teilweise oder vollständig ausgefahrene Schubelement 9 auch nur teilweise im gekapselten Zustand innerhalb des unteren Führungsrohres 21 und oberen Führungsrohres 22 bzw. im oberen Führungsrohr 22 befindet.

Die erfindungsgemäße Lösung umfasst auch eine solche Anordnung, bei der das obere Führungsrohr 22 bis zur Türbrüstung geführt ist, obwohl die Nass/Trockenraumtrennung der Kraftfahrzeugtür 1 unterhalb der Türbrüstung erfolgt.

Anstelle der in Fig. 2 dargestellten Aufteilung des Führungskanals 20 in ein unteres Führungsrohr 21 und ein oberes Führungsrohr 22 kann der Führungskanal 20 auch als durchgehender, vorzugsweise rohrförmiger Führungskanal 20 ausgebildet sein, wenn am Rolloantrieb 11 ein geeigneter Seileinlauf für das Rolloseil 17 vorgesehen ist und die Verbindung des durchgehenden Führungskanals 20 mit dem Antriebsgehäuse 23 sowie mit dem Seilumlenkgehäuse 24 ebenfalls staub- und wasserdicht ausgebildet wird.

Die Verbindung des Führungskanals 20 bzw. des unteren und oberen Führungsrohrs 21, 22 mit dem Antriebsgehäuse 23 bzw. dem Seilumlenkgehäuse 24 erfolgt vorzugsweise mittels einer dichtenden Steckaufnahme 231, 232 mit entsprechenden Toleranzen für eine staub- und wasserdichte Verbindung. Zur Befestigung der Verstelleinrichtung 10 auf einer Grund- oder Montageplatte oder am Türinnenblech der Kraftfahrzeugtür 1 gemäß Fig. 1 weist die Verstelleinrichtung 10 am Antriebsgehäuse 23 zwei in Bezug auf den Führungskanal 20 einander gegenüberliegende Befestigungsstellen 25, 26 und das Seilumlenkgehäuse 24 eine zentrale Bohrung 27 zum Durchführen eines Befestigungsmittels auf, das insbesondere.mit dem Türinnenblech der Kraftfahrzeugtür 1 verbunden wird.

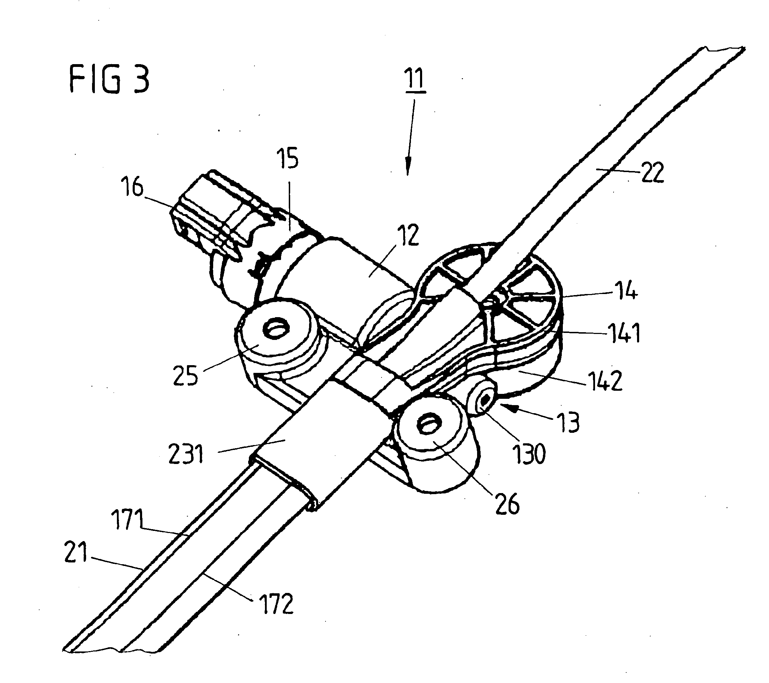

Fig. 3 zeigt in vergrößerter perspektivischer Darstellung die Verstelleinrichtung 10 im Bereich des Rolloantriebs 11 mit dem Elektromotor 12, dem Getriebe 13, der Seiltrommel 14, der Antriebselektronik 15 und dem Stecker 16 zur elektrischen Verbindung der Antriebselektronik 15 mit insbesondere einem Bussystem der Kraftfahrzeugtür 1. Die vergrößerte Darstellung verdeutlicht die staub- und feuchtigkeitsdichte Verbindung des unteren Führungsrohres 21 über die dichtende Steckaufnahme 231 mit dem Antriebsgehäuse 23, das durch einen Antriebsgehäusedeckel 230 abgeschlossen ist, der im geöffneten Zustand eine leichte Montage der Bauteile des Rolloantriebs 11, insbesondere eine Montage des Rolloseils 17 ermöglicht, das mit seinen Seilsträngen 171, 172 im unteren Führungsrohr 21 verläuft.

Während das obere Führungsrohr 22 im Wesentlichen in der geradlinigen Verlängerung des unteren Führungsrohres 21 ausgerichtet ist, ist die Seiltrommel 14 unter einem spitzen Winkel zum Verlauf des aus dem unteren und oberen Führungsrohr 21, 22 gebildeten Führungskanals 20 ausgerichtet. Die Seiltrommel 14 weist eine Seilrille 141 zur kraft- und formschlüssigen Aufnahme des Rolloseils 17 sowie ein Schneckenrad 142 auf, das mit einer Antriebsschnecke 130 des Getriebes 13 des Rolloantriebs 11 kämmt. Bei entsprechender Neigung und seitlicher Verlagerung der Seiltrommel 14 kann das Schneckenrad 142 als Geradverzahnung ausgebildet werden, so dass eine verbilligte Herstellung gegenüber der ansonsten erforderlichen Schrägverzahnung ermöglicht wird. Die miteinander insbesondere durch Steckverbindungen verbindbaren Verstellelemente der Verstelleinrichtung 10, nämlich der Rolloantrieb 11, der aus einem unteren und oberen Führungsrohr 21 zusammensetzbare oder durchgehend ausgebildete, vorzugsweise rohrförmige Führungskanal 20 und die Seilumlenkung 19, bilden einzelne Module eines modular aufgebauten Systems, das die Verbindung unterschiedlicher Materialien, unterschiedlicher Größen der einzelnen Module und unterschiedliche Einsatzorte in einer Kraftfahrzeugkarosserie oder Kraftfahrzeugtür ermöglicht. So lassen unterschiedliche Längen des Führungskanals 20 bzw. des unteren Führungsrohres 21 den Einsatz der Verstelleinrichtung 10 in unterschiedlichen Kraftfahrzeugtüren, der Einsatz unterschiedlicher Rolloantriebe 11 die Möglichkeit verschiedener Leistungsstärken und unterschiedliche Längen des oberen Führungsrohres 22 bzw. des Führungskanals 20 bis hin zum Wegfall des oberen Führungsrohres 22 bzw. einer entsprechenden Länge des Führungskanals 20 bis zum Rolloantrieb 11 den Einsatz der Verstelleinrichtung 10 im Nass- oder Trockenraum einer Kraftfahrzeugtür zu.

In der Nassraumausführung der modular aufgebauten Verstelleinrichtung 10 wird die Länge des oberen Führungsrohres 22 bzw. die Länge des Führungskanals 20 bei dessen einteiliger Ausbildung so bemessen, dass die Verstelleinrichtung 10 über ihre gesamte Länge gekapselt ist, so dass keinerlei Staub oder Feuchtigkeit in das gekapselte System der Verstelleinrichtung 10 eindringen kann. Zur Stabilisierung der Lage des Führungskanals 20 bzw. oberen Führungsrohrs 22 wird dessen oberes, dem Rolloantrieb 11 entgegen gesetztes Ende durch eine der Querschnittsform des Führungskanals 20 bzw. oberen Führungsrohrs 22 angepasste wasserdichte Rohrdurchführung 40 in der Nass/Trockenraumtrennung der Kraftfahrzeugtür, insbesondere im Türinnenblech der Kraftfahrzeugtür, gesteckt.

Das obere Führungsrohr 22 bzw. das obere Ende des durchgehenden Führungskanals 20 kann wahlweise mit der Türinnenverkleidung oder mit dem Türinnenblech zur sicheren Festlegung des Führungskanals 20 bzw. oberen Führungsrohrs 22 verclipst werden.

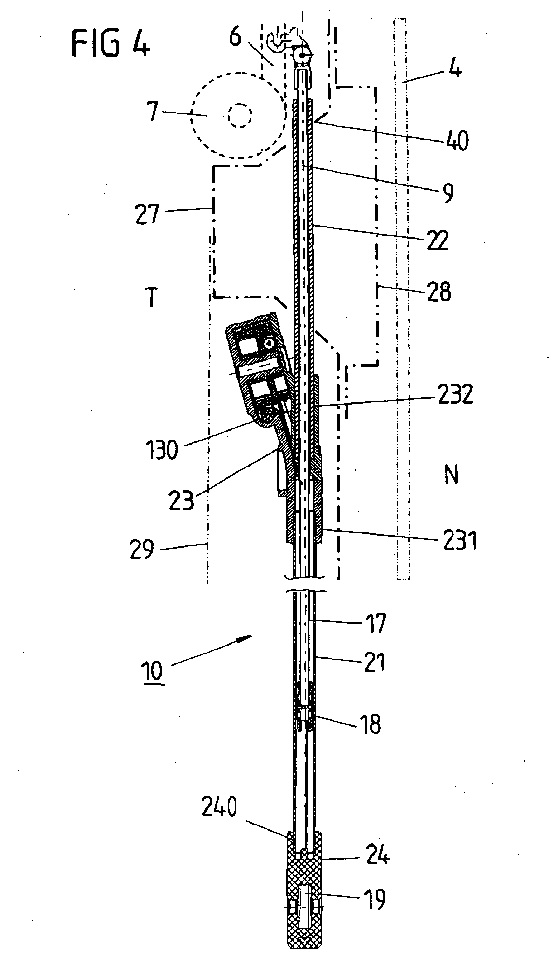

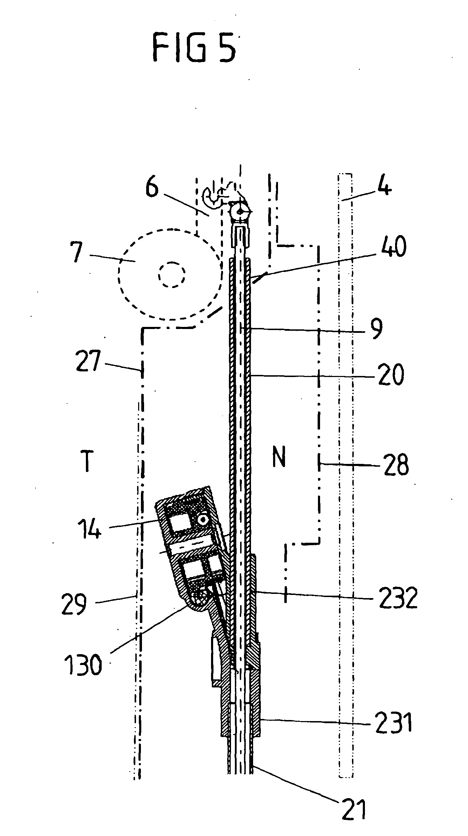

In den Fig. 4 und 5 ist der Einsatz der Verstelleinrichtung 10 für ein Rollo bei unterschiedlichem Verlauf des Türinnenblechs und damit der Nass/Trockenraumtrennung der Kraftfahrzeugtür in einem Längsschnitt durch den Türschacht 2 der Kraftfahrzeugtür 1 gemäß Fig. 1 dargestellt. Gleichzeitig verdeutlichen die Längsschnittdarstellungen der Fig. 4 und 5 eine Ausführungsform der Verbindung des oberen und unteren Führungsrohres 22, 21 mit dem Antriebsgehäuse 23 des Rolloantriebs 11 gemäß den Fig. 2 und 3. Die in den Fig. 4 und 5 dargestellten Längsschnitte durch eine Kraftfahrzeugtür im Bereich des Türschachtes einer Kraftfahrzeugtür zeigen bei weggelassener Türaußenhaut die im Nassraum der Kraftfahrzeugtür angeordnete Fensterscheibe 4, eine sich daran anschließende innere Schachtverstärkung 28 und den unterschiedlichen Verlauf eines Türinnenblechs 27 sowie die Anordnung einer Dichtfolie 29 zur Trennung des links von der Dichtfolie 29 verlaufenden Trockenraums T vom rechts von der Dichtfolie 29 verlaufenden Nassraum N der Kraftfahrzeugtür.

Das in Fig. 4 schematisch dargestellte Türinnenblech 27 verläuft von der oberen Türbrüstung bis unterhalb der Rollokassette zur Aufnahme der Wickelwelle 7 des Rollos, auf die der Rollobehang 6 aufgewickelt ist. Daran schließt sich ein senkrechter Abschnitt des Türinnenblechs 27 an, der wiederum oberhalb der Seiltrommel 14 des Rolloantriebs zur Schachtverstärkung 28 abknickt und in einen Abschnitt übergeht, der zwischen der Verstelleinrichtung 10 des Rollos und der Fensterscheibe 4 verläuft. Durch die zweifache Abstützung des oberen Führungsrohres 22 am Türinnenblech 27 wird eine besonders stabile Lagerung des das Schubelement 9 führenden oberen Führungsrohres 22 gewährleistet, wobei die obere Durchführung des oberen Führungsrohres 22 durch das Türinnenblech 27 als wasserdichte Rohrdurchführung 40 ausgeführt ist, so dass das Eindringen von Feuchtigkeit in das obere Führungsrohr 22 über die Öffnung zur Durchführung des Schubelements 9 verhindert wird.

Die Verbindung des oberen Führungsrohres 22 sowie des unteren Führungsrohres 21 erfolgt über die dichtenden Steckaufnahmen 231, 232 am Antriebsgehäuse 23, die hinreichend lang ausgebildet sind, um eine ausreichende Dichtfläche zu erzielen. Die Fig. 4 und 5 verdeutlichen weiterhin die Anordnung und Ausrichtung der Seiltrommel 14 in Bezug auf das untere und obere Führungsrohr 21, 22, die Anordnung der Antriebsschnecke 130 und die Durchführung des Rolloseils 17 zum unteren Führungsrohr 21. Der im unteren Führungsrohr 21 senkrecht zu seiner Bewegungsrichtung formschlüssig geführte Mitnehmer 18 ist mit dem Rolloseil 17 verbunden, das an der unteren Seilumlenkung 19 umgelenkt wird, die im Seilumlenkgehäuse 24 staub- und wasserdicht geschützt angeordnet ist, das ebenfalls über eine dichtende Steckaufnahme 240 mit dem unteren Führungsrohr 21 verbunden ist. Dabei kann die untere Seilumlenkung 19 wahlweise als Seilrolle oder als Gleitelement ausgebildet sein, wobei eine Seilrolle in entsprechenden Achsaufnahmen des Seilumlenkgehäuses 24 gelagert ist.

In der Ausführungsform gemäß Fig. 5, in der lediglich der obere Teil des Türschachtes dargestellt ist, verläuft das Türinnenblech 27 nach dem unterhalb der Rollokassette zur Aufnahme der Wickelwelle 7 des Rollos verlaufenden Abschnitt senkrecht, d. h. auf der der Fensterscheibe 4 in Bezug auf die Verstelleinrichtung 10 gegenüberliegenden Seite der Verstelleinrichtung 10, so dass das obere Führungsrohr 22 ausschließlich an der wasserdichten Rohrdurchführung 40 durch das Türinnenblech 27 in seinem oberen Bereich abgestützt wird, während das untere Ende des oberen Führungsrohrs 22 durch die dichtende Steckaufnahme 232 am Antriebsgehäuse 23 abgestützt ist, das wiederum über die Befestigungsstellen 25, 26 gemäß den Fig. 2 und 3 am Türinnenblech 27 bzw. einer Grund- oder Montageplatte im Türschacht 2 der Kraftfahrzeugtür 1 gemäß Fig. 1 befestigt ist.

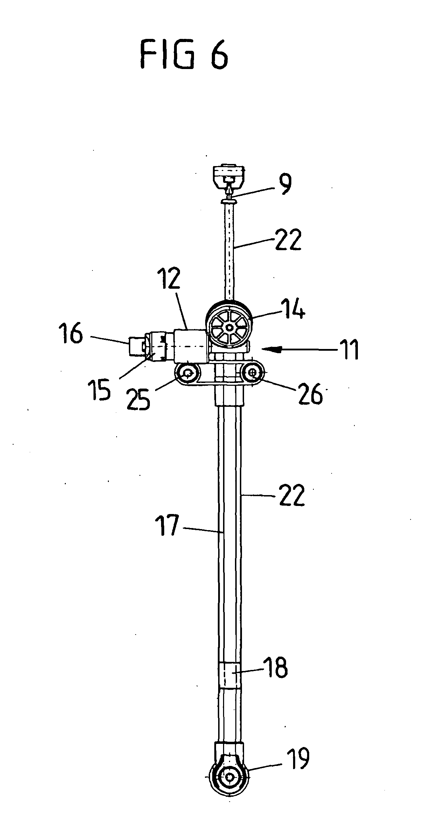

Das modulare Baukastensystem der Verstelleinrichtung 10 lässt neben der unterschiedlichen Dimensionierung und Auslegung der einzelnen Modulteile der Verstelleinrichtung 10 insbesondere auch eine unterschiedliche Anordnung und Ausrichtung des Rolloantriebs 11 zu, was am Beispiel der in den Fig. 6 bis 8 dargestellten Ansichten auf die Verstelleinrichtung 10 erläutert werden soll.

Fig. 6 zeigt eine Verstelleinrichtung 10 mit einer Anordnung und Ausrichtung des Rolloantriebs 11 wie in dem vorstehend anhand der Fig. 1 bis 5 dargestellten Ausführungsbeispiel beschrieben.

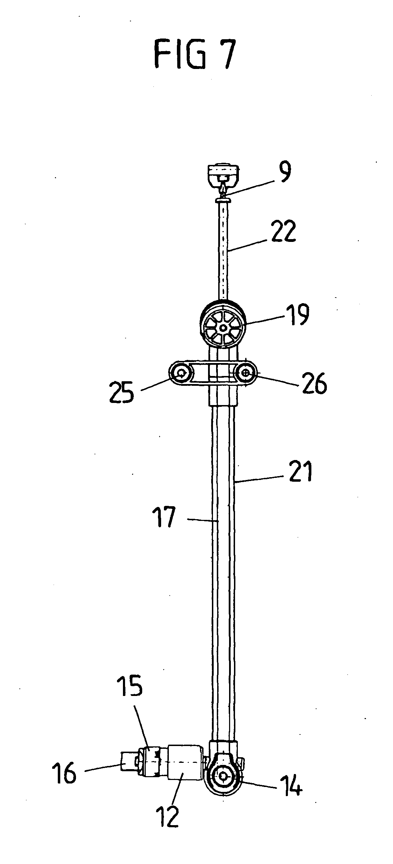

In der Anordnung gemäß Fig. 7 ist der Rolloantrieb 11 an das untere Ende des Führungskanals 20 bzw. unteren Führungsrohres 21 verlagert, während die Rolloseilumlenkung 19 in entgegen gesetzter Anordnung an das obere Ende des unteren Führungsrohres 21 verlegt ist.

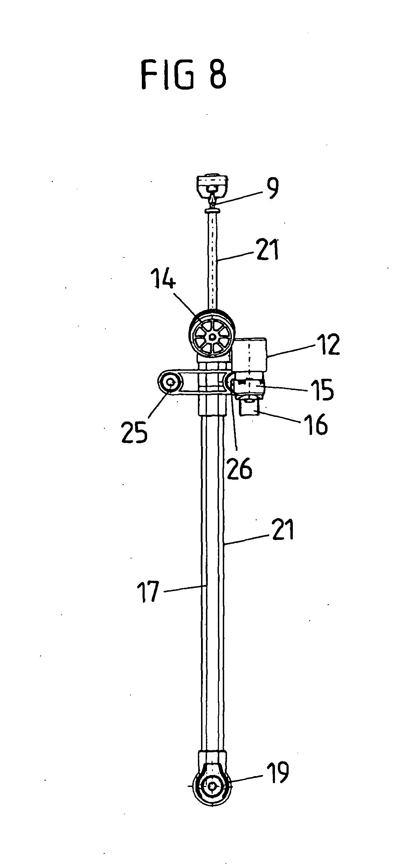

Fig. 8 zeigt eine Variante der Anordnung des Rolloantriebs 11, die der gemäß Fig. 6 entspricht, wobei der Motor, das Getriebe, die Antriebselektronik und der Stecker im Unterschied zur Anordnung gemäß Fig. 6 nicht senkrecht zum Verlauf des Führungskanals 20, sondern parallel zu diesem ausgerichtet sind und die Antriebsschnecke seitlich versetzt mit der Schneckenverzahnung der Seiltrommel kämmt so dass durch die gegenseitige Ausrichtung der Verzahnungen der Antriebsschnecke und des Schneckenrades eine Geradverzahnung des Schneckenrades ermöglicht wird.

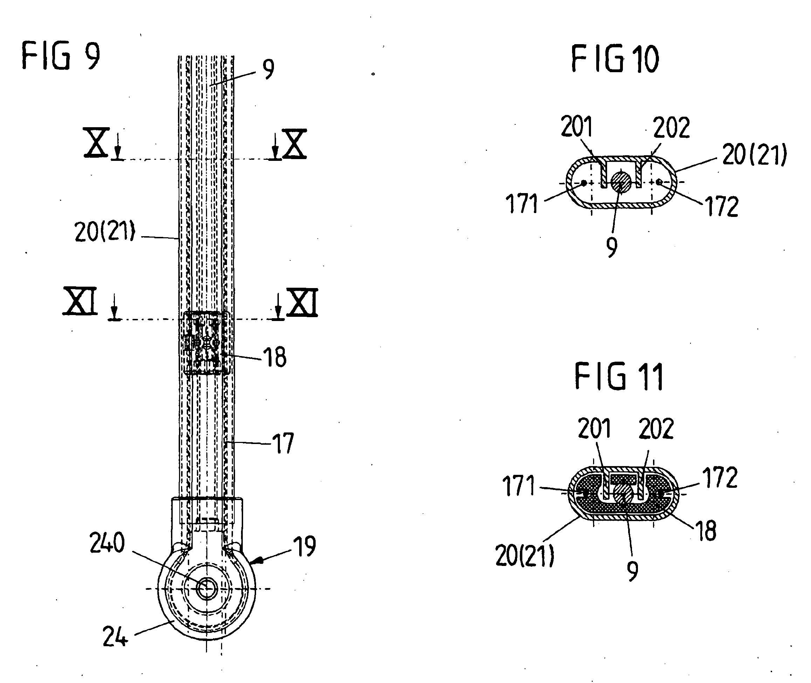

Fig. 9 zeigt in einer schematisch geschnittenen Draufsicht den unteren Abschnitt des Führungskanals 20 bzw. unteren Führungsrohres 21 mit der am unteren Ende angeordneten und innerhalb eines Seilumlenkgehäuses 24 gekapselten Seilumlenkung 19 zur Verdeutlichung der Führung des Rolloseils 17 sowie des im Innern des Führungskanals 20 bzw. unteren Führungsrohres 21 senkrecht zu seiner Bewegungsrichtung formschlüssig geführten Mitnehmers 18 zur Verstellung des Schubelements 9.

Fig. 10 zeigt in einem Schnitt durch den Führungskanal 20 bzw. das untere Führungsrohr 21 entlang der Linie X - X eine Querschnittsform des Führungskanals 20 bzw. Führungsrohrs 21 mit darin angeordnetem Schubelement 9 sowie den darin verlaufenden Seilsträngen 171, 172 des Rolloseils 17. Zur Trennung der Seilstränge 171, 172 des insbesondere als Stahlseil üblicherweise gefetteten Rolloseils 17 vom Schubelement 9 (die Problematik bezüglich einer Verschmutzung des Rollobehangs 6 in Folge des zwischen dem Rollobehang 6 und der Fensterscheibe 4 geführten Schubelements 9 wurde vorstehend dargelegt) sind im Innern des Führungskanals 20 bzw. des unteren Führungsrohrs 21 Stege bzw. Rippen 201, 202 angeordnet, die sich von einer Wand des Führungskanals 20 ausgehend in dessen Innenraum erstrecken. Die Trennung der Seilzüge 171, 172 des Rolloseils 17 vom Schubelement 9 gewährleistet, dass keine Schmutzpartikel oder Feuchtigkeit an das Schubelement 9 gelangen, die auf den Rollobehang 6 übertragen werden könnten.

Gleichzeitig dient die Anordnung der Rippen oder Stege 201, 202 im Innern des Führungskanals 20 zur zusätzlichen Führung des Mitnehmers 18, wodurch Klappergeräusche vermieden und ein eventuelles Verkanten des Mitnehmers 18 im Innern des Führungskanals 20 verhindert wird.

Fig. 11 verdeutlicht in einem Schnitt entlang der Linie XI-XI gemäß Fig. 9 die Lage des Mitnehmers 18 im Innern des Führungskanals 20 in Verbindung mit der Anordnung des Schubelements 9 und den Seilsträngen 171, 172 des Rolloseils 17. Dieser Darstellung ist zu entnehmen, dass der Mitnehmer 18 den Innenraum des Führungskanals 20 nahezu vollständig ausfüllt und in Einschnitten die Rippen oder Stege 201, 202 aufnimmt, die von einer Seitenwand des Führungskanals 20 in dessen Innenraum abstehen.

Neben der in den Fig. 10 und 11 dargestellten Querschnittsform des Führungskanals 20 bzw. unteren Führungsrohres 21 sind auch beliebig andere Querschnittsformen möglich und in der erfindungsgemäßen Verstelleinrichtung einsetzbar. Da der Führungskanal 20 bzw. das untere Führungsrohr 21 vorzugsweise durch Extrusion hergestellt wird, kann die Querschnittsform ohne Mehraufwand mit einer großen Variationsbreite frei gewählt werden, wobei die Ausbildung der nach innen gerichteten Rippen oder Stege 201, 202 bei Anwendung der Extrusionstechnik keinen wesentlichen Mehraufwand einschließt.

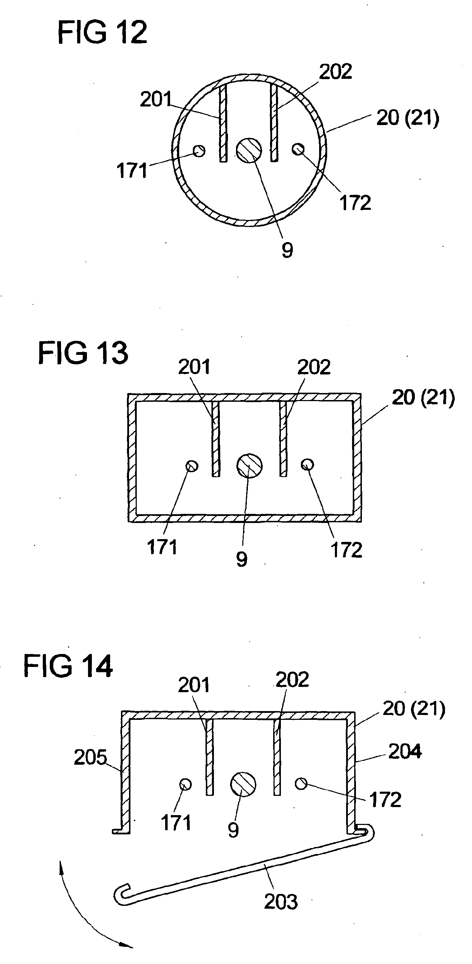

Fig. 12 zeigt einen im Querschnitt kreisförmig ausgebildeten Führungskanal 20 mit ebenfalls nach innen gerichteten Rippen oder Stegen 201, 202 zur Trennung des Schubelements 9 von den Seilsträngen 171, 172 des Rolloseils 17.

Fig. 13 zeigt einen im Querschnitt rechteckförmigen Führungskanal 20 mit ebenfalls nach innen gerichteten Rippen oder Stegen 201, 202, wobei die Abmessungen der Seiten des rechteckförmigen Führungskanals 20 beliebig gewählt werden können, was einen quadratischen Querschnitt einschließt.

Fig. 14 zeigt den im Querschnitt rechteckförmigen Führungskanal 20 mit einer Vorderwand 203, die klappbar an der einen Seitenwand 204 angelenkt und mit der gegenüberliegenden Seitenwand 205 verrastbar ist. Durch die Beweglichkeit der Vorderwand 203 und deren Verrastung mit der Seitenwand 205 in Richtung des in Fig. 14 eingetragenen Doppelpfeiles kann der Führungskanal 20 zum Einsetzen des Mitnehmers 18 sowie für sonstige Montage- und Wartungsarbeiten geöffnet und wieder staub- und feuchtigkeitsdicht verschlossen werden.

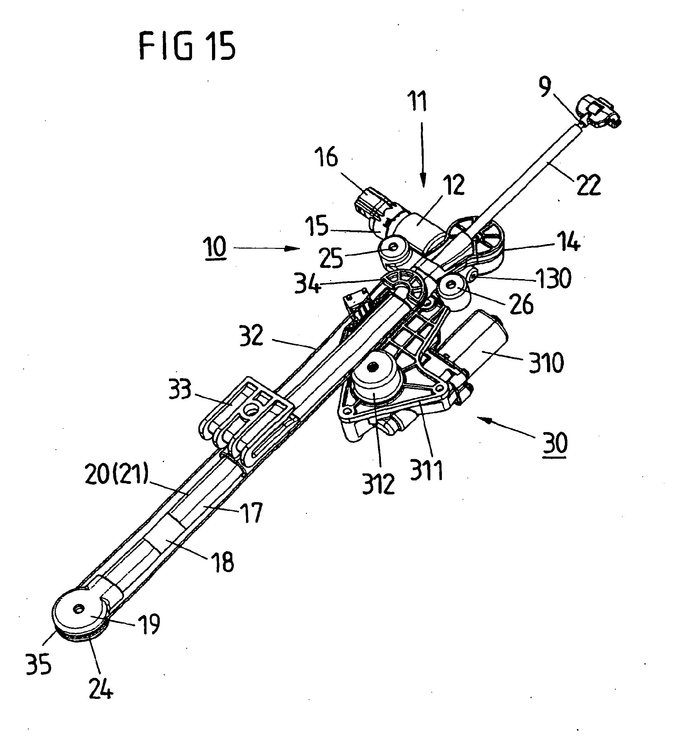

In den Fig. 15 bis 31 ist eine Erweiterung des vorstehend anhand der Fig. 1 bis 14 beschriebenen Rollos 5 dargestellt, dessen Verstelleinrichtung 10 vorzugsweise in Modulbauweise erstellt wird. Diese Erweiterung des Rollos 5 ermöglicht einen Synergieeffekt, indem Teile eines Fensterhebersystems mit der Verstelleinrichtung 10 des Rollos 5 gemäß Fig. 1 verbunden bzw. gemeinsam von der Verstelleinrichtung 10 und dem Fensterhebersystem genutzte Bauteile vorgesehen werden. Die in den Fig. 15 bis 31 dargestellten Ausführungsbeispiele und die nachfolgende Beschreibung beziehen sich auf die Verbindung der Verstelleinrichtung eines Rollos mit einem einsträngigen Seilfensterheber, sind aber in analoger Weise auf einen beliebigen anderen Fensterheber erweiterbar.

Eine Integration des Fensterhebersystems in die Verstelleinrichtung 10 des Rollos ermöglicht zur vollständigen Ausnutzung des Synergieeffektes ein Baukastensystem, in dem der Führungskanal 20 der Verstelleinrichtung 10 des Rollos 5 unabhängig davon vorgesehen ist, ob ein Rollo installiert wird. In dieser Ausführungsvariante ist die Anordnung eines Rollos unabhängig von einem Fensterhebersystem, d. h. auch bei getrennt vorgesehenen Fensterhebersystemen, eine Kombination der Verstelleinrichtung des Rollos mit dem Fensterhebersystem sowie eine alleinige Anordnung eines Fensterhebersystems möglich, wobei im letztgenannten Fall der Führungskanal 20 des Rollos leer bleibt, jedoch die gemeinsam für ein Rollo und das Fensterhebersystem vorgesehene Grundplatte sowie die gemeinsamen Seilumlenkungen durch das Fensterhebersystem wie im zweit genannten Fall genutzt werden können.

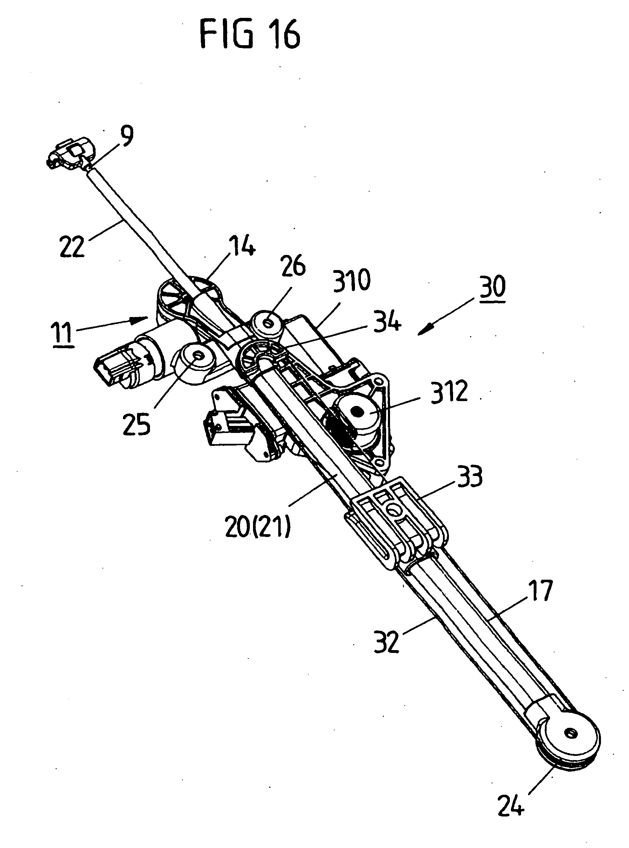

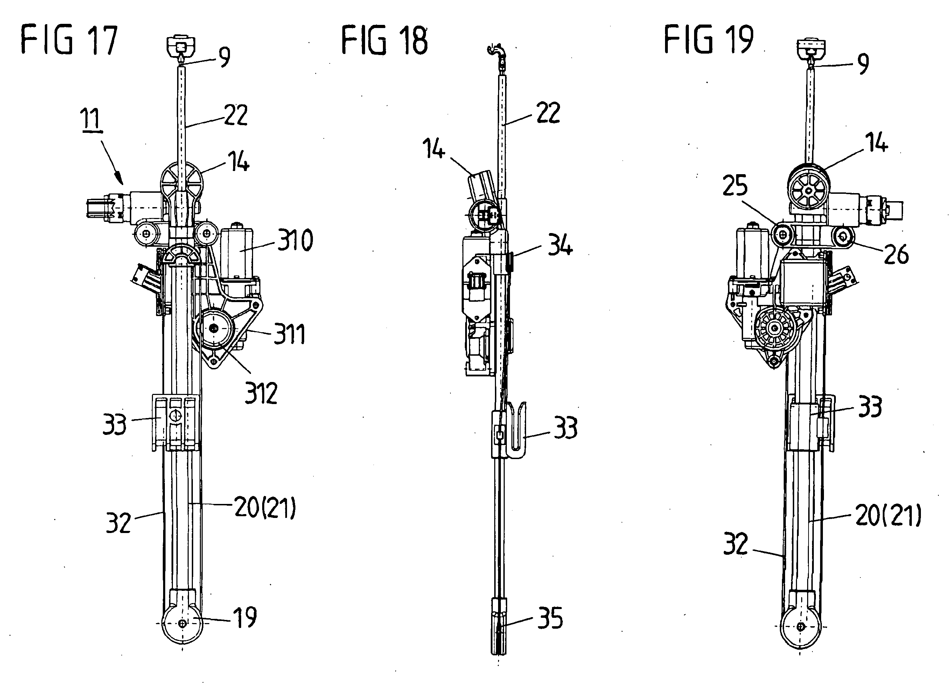

In den Fig. 15 und 16 ist in perspektivischer Ansicht aus unterschiedlichen Blickrichtungen und in den Fig. 17 bis 19 in einer Front-, Seiten- und Rückseitenansicht die vorstehend beschriebene Verstelleinrichtung 10 zum Verstellen eines Rollobehangs 6 über ein Schubelement 9 dargestellt. Der Führungskanal 20 der Verstelleinrichtung 10 wird dabei teilweise bzw. dessen unteres Führungsrohr 21 vollständig als Führungsschiene für den Seilfensterheber 30 eingesetzt, der sich aus einem Fensterheberantrieb 31, dem als Führungsschiene für einen Fensterheber-Mitnehmer 33 ausgebildeten Führungskanal 20 sowie einem Fensterheberseil 32 und einer oberen und unteren Seilumlenkung 34, 35 zusammensetzt.

Der Fensterheberantrieb 31 setzt sich aus einem Elektromotor 310, einem Getriebe 311 und einer mit dem Ausgang des Getriebes 311 gekoppelten Fensterheber-Seiltrommel 312 für das Fensterheberseil 32 zusammen, das in üblicher Weise auf eine spiralförmige Seilrille der Seiltrommel 312 aufgewickelt ist, über die obere und untere Seilumlenkung 34, 35 geführt wird und über einen Seilnippel mit dem Fensterheber-Mitnehmer 33 verbunden ist.

Die Verstelleinrichtung 10 ist in vorstehend beschriebener Weise aufgebaut, wobei der Rolloantrieb 11 quer zur Längserstreckung des Führungskanals 20 ausgerichtet und die Seiltrommel 14 zur Aufnahme des Rolloseils im spitzen Winkel zur Längserstreckung des Führungskanals 20 am Antriebsgehäuse 23 der Verstelleinrichtung 10 des Rollos angeordnet ist.

Der Fensterheberantrieb 31 ist benachbart zum Rolloantrieb 11 angeordnet, wobei die Fensterheber-Seiltrommel 312 so angeordnet und ausgerichtet ist, dass der eine Seilstrang des Fensterheberseils 32 über eine entsprechende Einführung zur Fensterheber-Seiltrommel 312 geführt wird. Die obere Seilumlenkung 34 des Fensterhebersystems 30 kann wahlweise in das Gehäuse des Fensterheberantriebs 31 integriert oder auf das Gehäuse aufgesteckt werden.

Für eine Erweiterung der Modulbauweise der Verstelleinrichtung 10 des (Sonnenschutz) Rollos kann der Fensterheberantrieb 31 ebenfalls als Modul ausgebildet oder alternativ in einem gemeinsamen, die Funktionselemente des Fensterhebersystems abkapselnden Gehäuse zusammen mit dem Rolloantrieb 11 angeordnet werden. In Modulbauweise des Fensterheberantriebs 31 ist eine Verbindung zwischen dem Gehäuse des Fensterheberantriebs 31 und dem Gehäuse 23 des Rolloantriebs 11 vorgesehen, so dass die Befestigungsstellen 25, 26 des Gehäuses 23 des Rollantriebs 11 auch zur Befestigung des Fensterheberantriebs 31 dienen.

Die Seilumlenkung 19 für das Rolloseil 17 und die Seilumlenkung 35 für das Fensterheberseil 32 sind konzentrisch zueinander angeordnet und - wie insbesondere der schematischen Draufsicht gemäß Fig. 17 zu entnehmen ist - in einem gemeinsamen Gehäuse, beispielsweise dem Seilumlenkgehäuse 24 für die Rolloseilumlenkung 19 angeordnet, das staub- und feuchtigkeitsdicht auf den Führungskanal 20 bzw. das untere Führungsrohr 21 der Verstelleinrichtung 10 für das Rollo aufgesteckt ist.

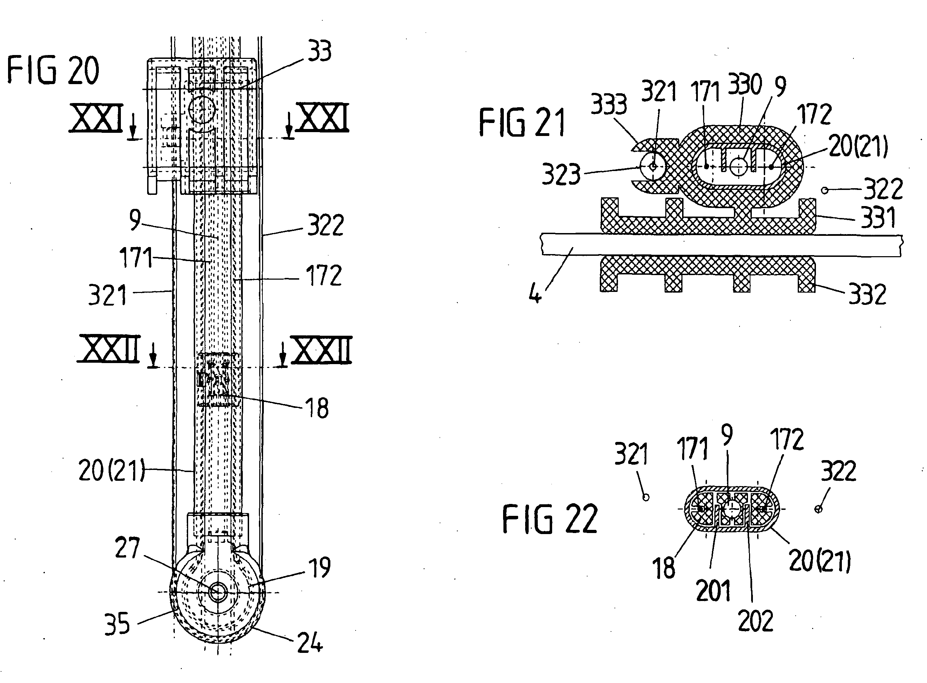

Fig. 20 zeigt in schematischer Frontansicht den unteren Teil des Führungskanals 20 der Verstelleinrichtung 10 des Rollos mit dem im Innern des Führungskanals 20 angeordneten Mitnehmer 18, dem Rolloseil 17 und dem Schubelement 9 sowie der auf das untere Ende des Führungskanals 20 staub- und feuchtigkeitsdicht aufgesteckten unteren Rolloseilumlenkung 19.

Auf dem Führungskanal 20 bzw. unteren Führungsrohr 21 der Verstelleinrichtung 10 des Rollos ist der Fensterheber-Mitnehmer 33 geführt, der zur Veränderung seiner Lage auf dem Führungskanal 20 bzw. unterem Führungsrohr 21 mit den Seilsträngen 321, 322 des als Kraftübertragungselement wirkenden Fensterheberseils 32 verbunden ist. Wie dem in der Fig. 21 dargestellten Schnitt entlang der Linie XXI-XXI gemäß Fig. 20 zu entnehmen ist, weist der Fensterheber-Mitnehmer 33 zwei Mitnehmerbacken 331, 332 auf, zwischen denen die Fensterscheibe 4 eingeklemmt, eingeclipst oder formschlüssig über beispielsweise ein Loch in der Fensterscheibe 4 eingesetzt ist. Die Mitnehmerbacken 331, 332 sind mit einem Führungsabschnitt 330 des Fensterheber-Mitnehmers 33 verbunden, der sich formschlüssig um die Außenkontur des Führungskanals 20 bzw. unteren Führungsrohrs 21 mit dem darin angeordneten Schubelement 9 sowie den Seilsträngen des Rolloseils 17 legt. Als Teil des Führungsabschnittes 330 ist eine Seilnippelaufnahme 333 für einen Seilnippel 323 des Fensterheberseils 32 ausgebildet. Der Querschnittsdarstellung gemäß Fig. 21 sind weiterhin die beiden Seilstränge 321, 322 des Fensterheberseils 32 im Schnitt zu entnehmen.

Fig. 22 zeigt in einem Schnitt entlang der Linie XXII-XXII gemäß Fig. 20 die Schnittstelle zur formschlüssigen Verbindung des formschlüssig senkrecht zu seiner Bewegungsrichtung im Führungskanal 20 bzw. unteren Führungsrohr 21 geführten Rollo-Mitnehmers 18 mit dem Schubelement 9 sowie die wechselseitige Abdichtung des Schubelements 9 gegenüber den Seilsträngen 171, 172 des Rolloseils 17.

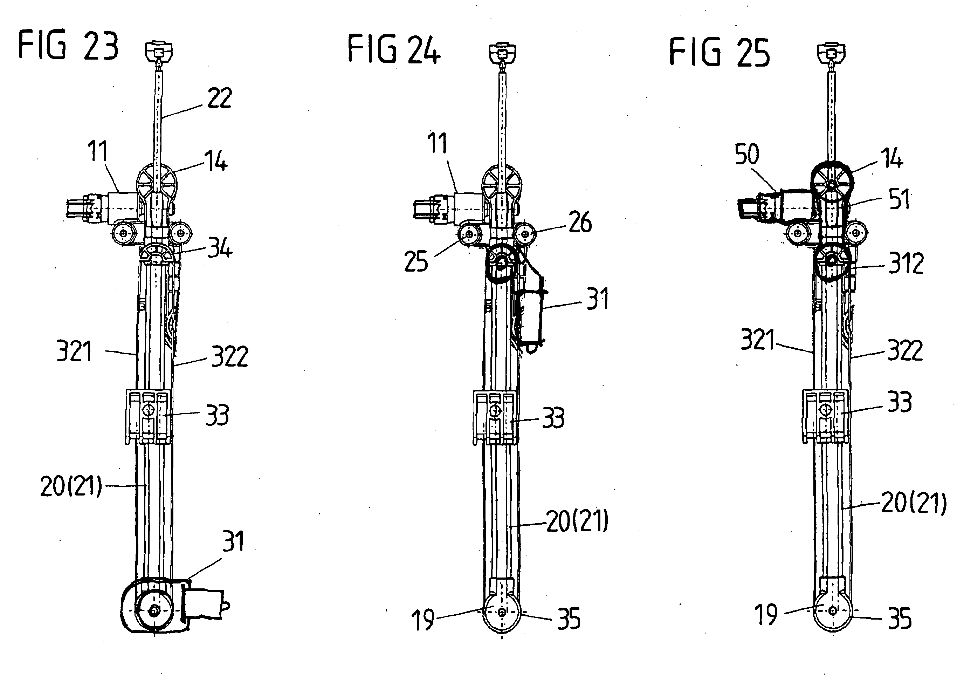

In den Fig. 23 bis 26 sind verschiedene Anordnungen, Ausrichtungen und Ausgestaltungen des Fensterheberantriebs 31 in Bezug auf die Ausgestaltung der Verstelleinrichtung 10 für das Rollo gemäß den Fig. 2 bis 6 dargestellt und zeigen die Möglichkeiten für ein ebenfalls in Modulbauweise aufgebautes Fensterhebersystem auf.

Abweichend von der Anordnung des Fensterheberantriebs 31 gemäß dem vorstehend beschriebenen Ausführungsbeispiel zeigt Fig. 23 eine Anordnung des Fensterheberantriebs 31 am unteren Ende des mit seiner Außenkontur als Führungsschiene dienenden Führungskanals 20, wobei die Fensterheber-Seiltrommel 312 gleichzeitig die untere Umlenkung für das Fensterheberseil 32 bildet, während die obere Fensterheber-Seilumlenkung 34 entweder als Teil des Rolloantriebs 11 ausgebildet oder in das Antriebsgehäuse 23 des Rolloantriebs 11 eingesteckt ist.

In der Ausgestaltung gemäß Fig. 24 bildet die Fensterheber-Seiltrommel 312 die obere Fensterheber-Seilumlenkung 34, wobei der Elektromotor 310 abweichend von der Ausführungsform der Figuren 15 bis 19 in entgegen gesetzter Richtung, d. h. zum unteren Ende des Führungskanals 20 bzw. unteren Führungsrohrs 21 hin ausgerichtet ist.

In der Ausführungsform gemäß Fig. 25 wird ein weiterführender Synergieeffekt dadurch erzielt, dass ein gemeinsamer Elektromotor 50 sowohl für den Rolloantrieb als auch für den Fensterheberantrieb vorgesehen ist, dessen Ausgangswelle über ein Umschaltgetriebe 51 wahlweise mit der Rolloseiltrommel 14 oder der Fensterheber-Seiltrommel 312 koppelbar ist. Durch die Anordnung eines gemeinsamen Elektromotors 50 ergibt sich auch die Möglichkeit der Anordnung einer gemeinsamen Antriebselektronik für die Verstelleinrichtung des Rollos als auch für das Fensterhebersystem sowie einer gemeinsamen Steckerverbindung beispielsweise zur Verbindung mit dem Bussystem einer Kraftfahrzeugtür.

Die gemeinsame Antriebselektronik oder Kopplung der Antriebselektroniken für die Verstelleinrichtung 10 des Rollos und das Fensterhebersystem gewährleistet, dass eine Verstellung des Rollobehangs nur bis zu der Höhe möglich ist, bis zu der die Fensterscheibe geschlossen ist. Vorzugsweise ist ein so genannter Automatiklauf vorgesehen, bei dem nur bei geschlossener Fensterscheibe das Rollo in die obere bzw. untere Endlage verfährt.

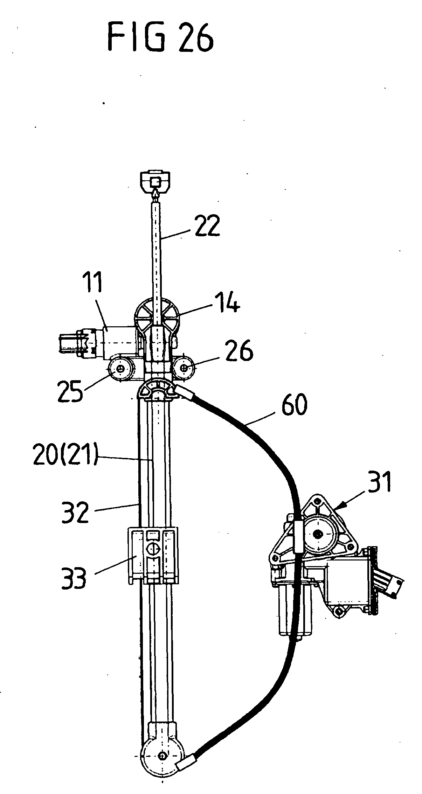

In der Ausführungsform gemäß Fig. 26 weist das Fensterhebersystem einen Bowden 60 zur Führung des Fensterheberseils 32 zur oberen und unteren Fensterheber-Seilumlenkung 34, 35 auf, so dass der Fensterheberantrieb 31 getrennt von der Verstelleinrichtung 10 für das Rollo angeordnet werden kann. Diese Ausführungsform ermöglicht unter anderem die unterschiedliche Anordnung der Verstelleinrichtung 10 für das Rollo und des Fensterheberantriebs 31 auf verschiedenen Montageplatten oder an unterschiedlichen Stellen an einem Türinnenblech einer Kraftfahrzeugtür. Sie ermöglicht auch die Anordnung beispielsweise des Fensterheberantriebs 31 auf der Trockenraumseite einer Kraftfahrzeugtür und die Anordnung der Verstelleinrichtung 10 für das Rollo auf der Nassraumseite der Kraftfahrzeugtür.

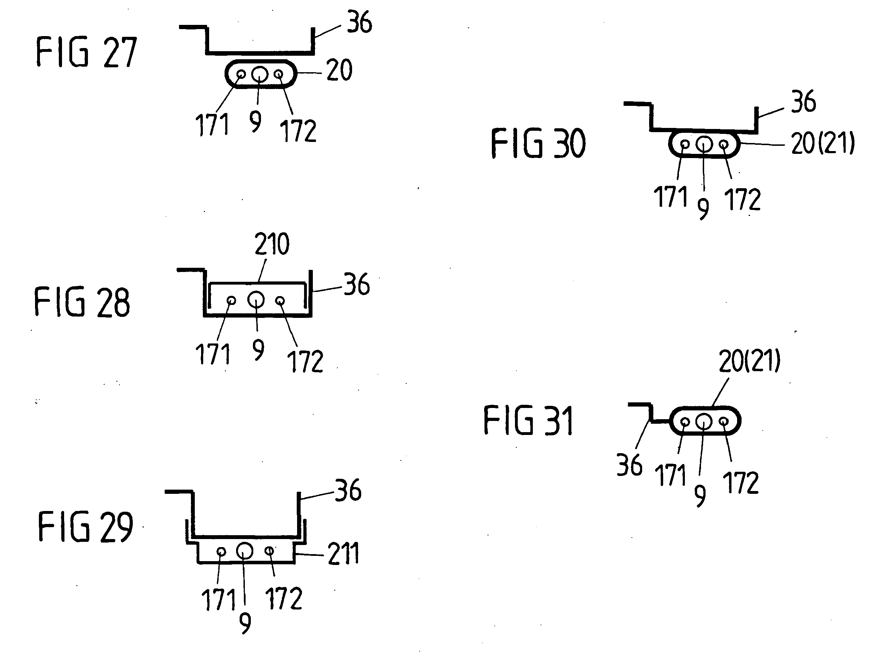

In den Fig. 27 bis 31 sind verschiedene Ausführungsformen zur Integration eines Fensterhebersystems in die Verstelleinrichtung für ein Rollo dargestellt, wobei diese Darstellungen nur beispielhaft und nicht als erschöpfend anzusehen sind. Die Fig. 27 bis 23 zeigen in einem schematischen Querschnitt eine zweiteilige Ausführung der Fensterheberintegration in die Verstelleinrichtung für ein Rollo, wobei Fig. 27 eine getrennte, jedoch unmittelbar benachbarte Anordnung einer Fensterheber-Führungsschiene 36 und des Führungskanals 20 einer Verstelleinrichtung des Rollos zeigt. Durch wechselseitige Abstützung der Fensterheber-Führungsschiene 36 und des Führungskanals 20 wird eine Stabilitätserhöhung bzw. eine gemeinsame Anbringung auf einer Grund- oder Montageplatte erzielt.

Fig. 28 zeigt die Integration des Führungskanals 20 einer Verstelleinrichtung für ein Rollo in eine konventionelle Führungsschiene deren Hohlraum durch eine Abdeckung 210 zur Bildung des Führungskanals 20 geschlossen wird, so dass das Schubelement 9 und die Seilzüge 171, 172 des Rolloseils staub- und feuchtigkeitsdicht abgeschottet sind. Die Größe und Ausgestaltung des Führungskanals 20 bzw. der Fensterheber-Führungsschiene 36 ist dabei so zu dimensionieren, dass der Fensterheber-Mitnehmer bei seiner Gleitbewegung entlang der Fensterheber-Führungsschiene 36 nicht behindert wird.

Auch in dieser Ausführungsform können zusätzliche Stege oder Rippen eine Berührung des Schubelements 9 mit den Seilsträngen 171, 172 des Rolloseils mit daraus resultierender Verschmutzung des Schubelements 9 verhindern.

In der Ausführungsform gemäß Fig. 29 wird der Führungskanal 20 für die Verstelleinrichtung des Rollos durch eine auf die Außenseite einer konventionellen Führungsschiene aufgesteckte Kappe 211 hergestellt, so dass in dem zwischen der Kappe 211 und der Außenseite der Fensterheber-Führungsschiene 36 gebildeten Hohlraum das Schubelement 9 und das Rolloseil 17 angeordnet werden kann.

In den Fig. 30 bis 31 ist eine einteilige Verbindung des Führungskanals 20 der Verstelleinrichtung 10 für ein Rollo 5 mit einer Fensterheber-Führungsschiene 36 dargestellt, das in optimaler Weise den möglichen Synergieeffekt ausnutzt.

Der in Fig. 30 schematisch dargestellte Querschnitt entspricht der vorstehend anhand der Fig. 15 bis 19 beschriebenen Ausführungsform, während in der Variante gemäß Fig. 31 der Führungskanal 20 als Teil der Fensterheber-Führungsschiene 36 bzw. der Führungsabschnitt zur Aufnahme des Fensterheber-Mitnehmers als seitlicher Vorsprung des Führungskanals 20 der Verstelleinrichtung 10 des Rollos 5 ausgebildet ist.

Auch in diesen Ausführungsformen können zusätzlich im Innern des Führungskanals 20 angeordnete Rippen oder Stege eine räumliche Trennung des Schubelements 9 von den Seilsträngen 171, 172 des Rolloseils bewirken und damit eine Verschmutzung des Schubelements 9 und in der Folge davon des Rollobehangs verhindern.

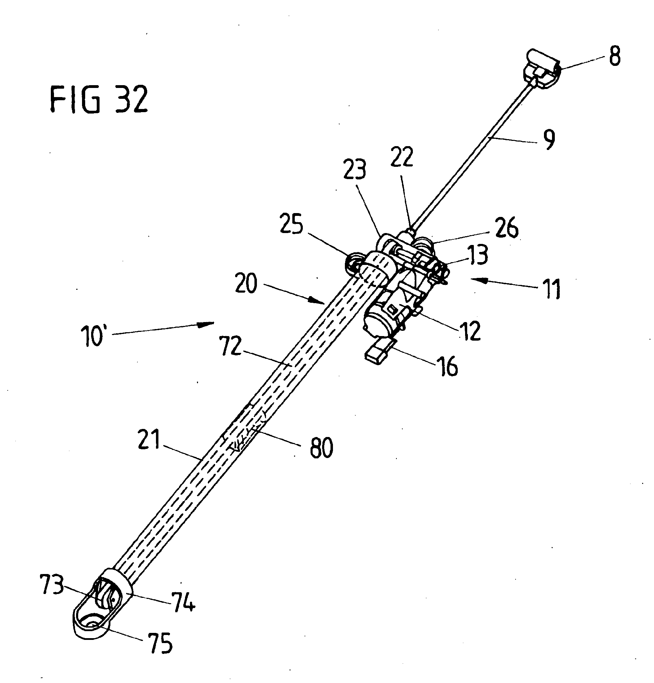

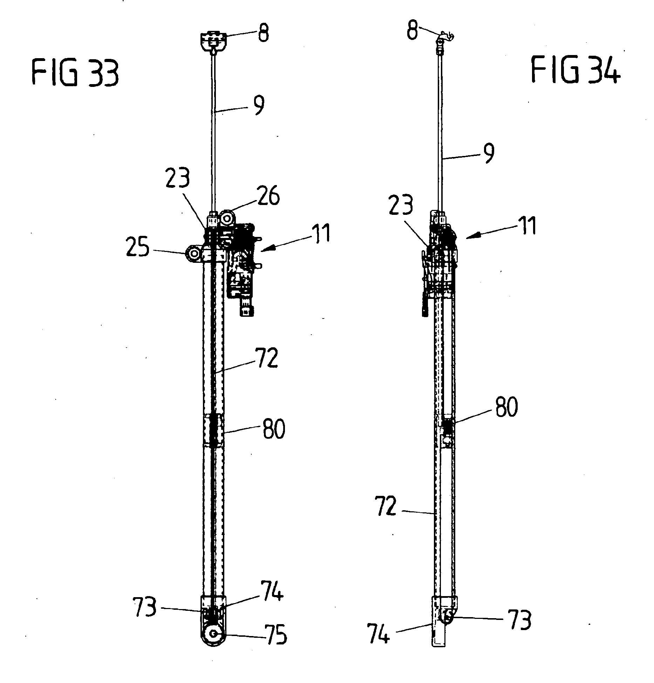

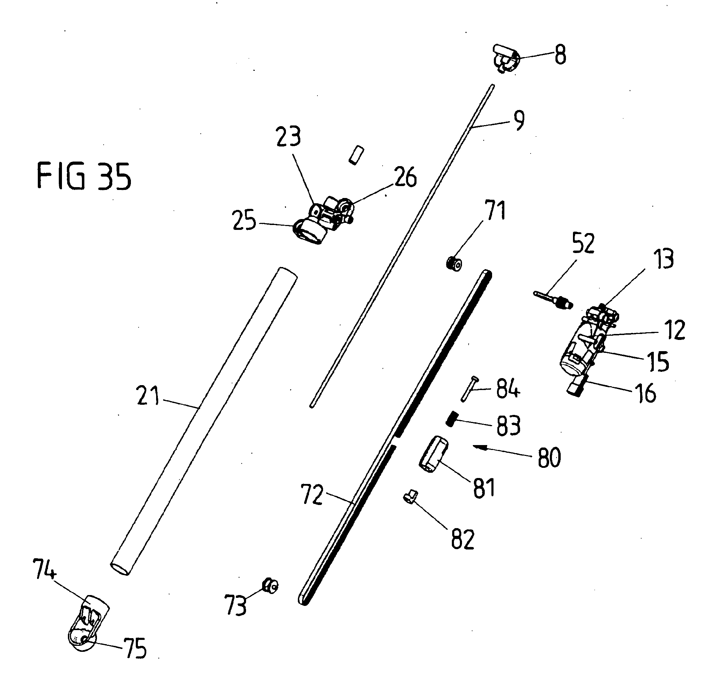

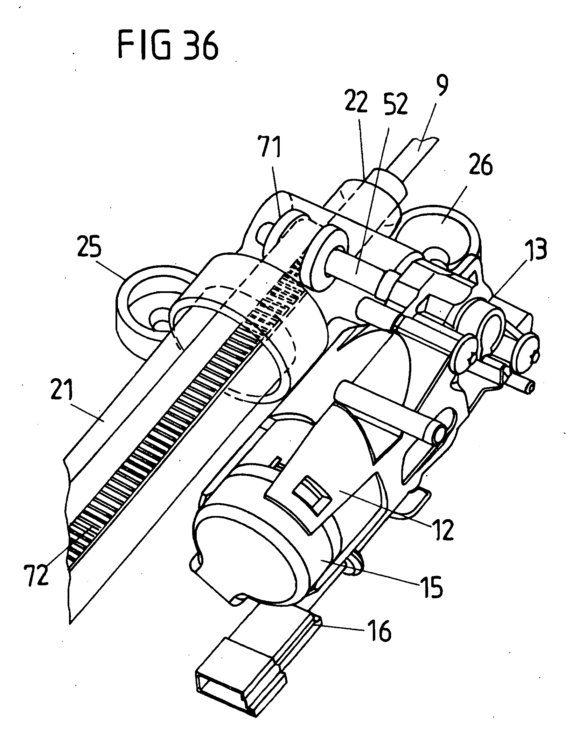

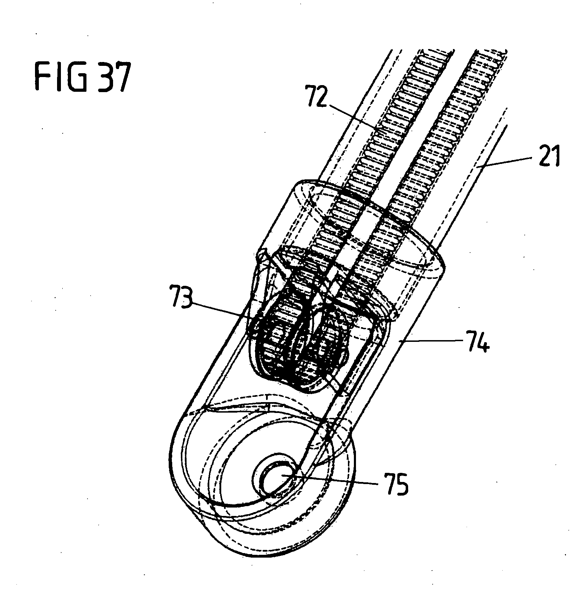

Die in den Fig. 32 bis 35 in einer perspektivischen Ansicht, einer Front- und Seiteriansicht und einer perspektivischen Einzelteildarstellung sowie in den.Fig. 36 und 37 in vergrößerter perspektivischer Ansicht des oberen und unteren Endes gezeigte zweite Verstelleinrichtung 10' für das Schubelement 9 des Rollos ist ebenfalls nach Art eines einsträngigen Seilfensterhebers ausgebildet und weist im Unterschied zur ersten Verstelleinrichtung 10 einen Zahnriemen 72 als flexibles Zugmittel mit Formschlusselementen auf. Die Verstelleinrichtung 10' enthält den elektromotorischen Rolloantrieb 11, der sich aus einem Elektromotor 12, einem Getriebe 13, einer Antriebselektronik 15 und einem Stecker 16 zum Anschluss des Rolloantriebs 11 an eine Steuer- und Regelelektronik des Kraftfahrzeugs bzw. der Kraftfahrzeugtür, insbesondere an ein Bussystem, einem vorzugsweise rohrförmigen Führungskanal 20 mit einem unteren Führungsrohr 21 und einem oberen Führungsrohr 22, einem Antriebsgehäuse oder Kopfteil 23 sowie einem Umlenkrollengehäuse oder Fußteil 74 zusammensetzt, die staub- und wasserdicht mit dem Führungskanal 20 bzw. unteren Führungsrohr 21 verbunden sind.

Der Zahnriemen 72 verläuft in wahlweise offener oder geschlossener Riemenausführung im unteren Führungsrohr 21 und kämmt im Antriebsgehäuse oder Kopfteil 23 mit seiner Verzahnung mit der Gegenverzahnung eines Antriebsritzels 71, das über eine Antriebswelle 52 mit dem Getriebe 13 des Rolloantriebs 11 verbunden ist, und mit der Gegenverzahnung einer Umlenkrolle 73, die im Umlenkrollengehäuse oder Fußteil 74 angeordnet ist. Der Zahnriemen 72 ist außerdem mit seiner Verzahnung formschlüssig mit der Gegenverzahnung eines im unteren Führungsrohr 21 angeordneten und mit dem Schubelement 9 verbundenen Mitnehmers 80 verbunden. Durch Betätigung des Rolloantriebs 11 und dadurch bedingter Drehung des Antriebsritzels 71 in der einen oder anderen Drehrichtung wird der Zahnriemen 72 in derselben Drehrichtung um das Antriebsritzel 81 und die Umlenkrolle 73 gedreht, so dass der Mitnehmer 80 zum Kopfteil 23 hinbewegt oder vom Kopfteil 23 wegbewegt wird und damit das Schubelement 9 aus dem unteren Führungsrohr 21 herausbewegt oder in das untere Führungsrohr 21 einfährt.

Die zweite Verstelleinrichtung 10' mit einem Zahnriemen 72 als flexiblem Zugmittel mit Formschlusselementen kann analog zur ersten Verstelleinrichtung 10 mit einem Rolloseil als flexiblem Zugmittel einen zumindest teilweise offenen Führungskanal 20 aufweisen, der zumindest über einen Teil seines Umfangs und seiner Länge offen und vorzugsweise geschlitzt ist, so dass Teile eines zum Verstellen des Schubelements 9 im Führungskanal 20 angeordneten Mitnehmers 18 durch den Schlitz des Führungskanals 20 greifen und mit Zusatzteilen verbunden sind oder Endlagenschalter, Positionserfassungselemente öder dergleichen betätigen können. Zur staub- und feuchtigkeitsdichten Abschottung kann eine Dichtung vorgesehen werden, die einen Durchgriff von Teilen der Verstelleinrichtung 10 durch den Führungskanal 20 ermöglicht und gleichwohl den Innenraum des Führungskanals 20 frei von Schmutzpartikeln und Feuchtigkeit hält.

Das Schubelement 9 ist in dem oberen Führungsrohr 22 ebenfalls gekapselt geführt und die Umlenkrolle 73 durch das Umlenkrollengehäuse 74 gekapselt, wobei die Verbindung des Umlenkrollengehäuses bzw. Fußteils 74 und des Antriebsgehäuses bzw. Kopfteils 23 mit dem unteren Führungsrohr 21 bzw. mit dem Führungskanal 20 staub- und wasserdicht ausgebildet ist. Die Länge des aus einer Muffe des Antriebsgehäuses bzw. Kopfteils 23 herausgeführten oberen Führungsrohres 22 bzw. des Führungskanals 20 ist so bemessen, dass das Schubelement 9 von seinem mit dem Rollozugstab 8 verbundenen Ende aus der Türinnenverkleidung bzw. Nass/Trockenraumtrennung der Fahrzeugkarosserie ragt.

Alternativ kann nur eine Kapselung des unteren Führungsrohres 21 vorgesehen werden, während das obere Führungsrohr 22 lediglich der Längsführung des Schubelements 9 dient. Das obere Führungsrohr 22 kann auch vollständig entfallen und es versteht sich, dass das obere Führungsrohr 22 auch in gekapselter Form das Schubelement 9 nur im eingefahrenen Zustand vollständig bis zur Querverbindung mit dem Rollozugstab 8 aufnimmt, während sich das nur teilweise oder vollständig ausgefahrene Schubelement 9 auch nur teilweise im gekapselten Zustand innerhalb des unteren Führungsrohres 21 und oberen Führungsrohres 22 bzw. im oberen Führungsrohr 22 befindet.

Zur Befestigung der Verstelleinrichtung 10' auf einer Grund- oder Montageplatte oder am Türinnenblech der Kraftfahrzeugtür 1 weist die Verstelleinrichtung 10' am Antriebsgehäuse bzw. Kopfteil 23 zwei in Bezug auf den Führungskanal 20 einander gegenüberliegende Befestigungsstellen 25, 26 und das Umlenkrollengehäuse 74 eine Befestigungsbohrung 75 zum Durchführen eines Befestigungsmittels auf, das insbesondere mit dem Türinnenblech der Kraftfahrzeugtür 1 verbunden wird.

Fig. 36 zeigt in vergrößerter perspektivischer Darstellung die Verstelleinrichtung 10' im Bereich des Rolloantriebs 11 mit dem Elektromotor 12, dem Getriebe 13, der Antriebswelle 52, des mit dem Zahnriemen 72 kämmenden Antriebsritzels 71, der Antriebselektronik 15 und dem Stecker 16 zur elektrischen Verbindung der Antriebselektronik 15 mit insbesondere einem Bussystem der Kraftfahrzeugtür 1. Die vergrößerte Darstellung verdeutlicht die staub- und feuchtigkeitsdichte Verbindung des unteren Führungsrohres 21 mit dem Antriebsgehäuse bzw. Kopfteil 23 und dessen Befestigungsstellen 25, 26. Während das obere Führungsrohr 22 nur kurz ausgebildet und in geradliniger Verlängerung des unteren Führungsrohres 21 ausgerichtet ist, sind die Antriebswelle 52 und das mit dem Zahnriemen 72 kämmende Antriebsritzels 71 senkrecht zum unteren Führungsrohr 21 ausgerichtet.

Fig. 37 zeigt in ebenfalls vergrößerter perspektivischer Darstellung die Verstelleinrichtung 10' am unteren Ende des Führungsrohres 21, das über eine staub- und wasserdichte Steckverbindung mit dem Umlenkrollengehäuse oder Fußteil 74 verbunden ist, in dem die Zahnriemen-Umlenkung mit der im Umlenkrollengehäuse 74 angeordneten Umlenkrolle 73 und der Befestigungsbohrung 75 zur Verbindung de Verstelleinrichtung 10' im unteren Bereich des Führungsrohres 21 mit beispielsweise dem Türinnenblech der Kraftfahrzeugtür 1 angeordnet sind.

Die miteinander durch Steckverbindungen verbindbaren Verstellelemente der Verstelleinrichtung 10', nämlich der im Antriebsgehäuse bzw. Kopfteil 23 angeordnete Rolloantrieb 11, der aus einem unteren und oberen Führungsrohr 21, 22 zusammensetzbare oder durchgehend ausgebildete, vorzugsweise rohrförmige Führungskanal 20 und die im Umlenkrollengehäuse 74 angeordnete Umlenkrolle 73 bilden einzelne Module eines modular aufgebauten Systems, das die Verbindung unterschiedlicher Materialien, unterschiedlicher Größen der einzelnen Module und unterschiedliche Einsatzorte in einer Kraftfahrzeugkarosserie oder Kraftfahrzeugtür ermöglicht. So lassen unterschiedliche Längen des Führungskanals 20 bzw. des unteren Führungsrohres 21 den Einsatz der Verstelleinrichtung 10' in unterschiedlichen Kraftfahrzeugtüren, der Einsatz unterschiedlicher Rolloantriebe 11 die Möglichkeit verschiedener Leistungsstärken und unterschiedliche Längen des oberen Führungsrohres 22 bzw. des Führungskanals 20 bis hin zum Wegfall des oberen Führungsrohres 22 bzw. einer entsprechenden Länge des Führungskanals 20 bis zum Rolloantrieb 11 den Einsatz der Verstelleinrichtung 10' im Nass- oder Trockenraum einer Kraftfahrzeugtür zu.

In der Nassraumausführung der modular aufgebauten Verstelleinrichtung 10' wird die Länge des oberen Führungsrohres 22 bzw. die Länge des Führungskanals 20 bei dessen einteiliger Ausbildung so bemessen, dass die Verstelleinrichtung 10' über ihre gesamte Länge gekapselt ist, so dass keinerlei Staub oder Feuchtigkeit in das gekapselte System der Verstelleinrichtung 10' eindringen kann. Zur Stabilisierung der Lage des Führungskanals 20 bzw. oberen Führungsrohrs 22 wird dessen oberes, dem Rolloantrieb 11 entgegen gesetztes Ende durch eine der Querschnittsform des Führungskanals 20 bzw. oberen Führungsrohrs 22 angepasste wasserdichte Rohrdurchführung in der Nass/Trockenraumtrennung der Kraftfahrzeugtür, insbesondere im Türinnenblech der Kraftfahrzeugtür, gesteckt.

Das obere Führungsrohr 22 bzw. das obere Ende des durchgehenden Führungskanals 20 kann wahlweise auch mit der Türinnenverkleidung oder mit dem Türinnenblech zur sicheren Festlegung des Führungskanals 20 bzw. oberen Führungsrohrs 22 verclipst werden.

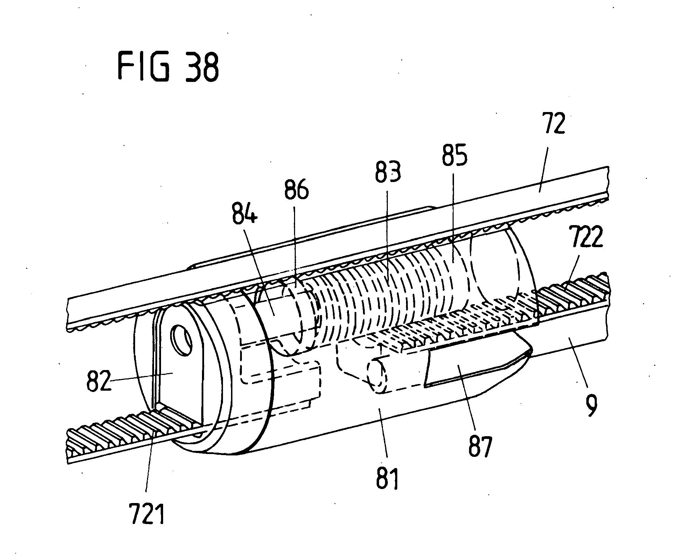

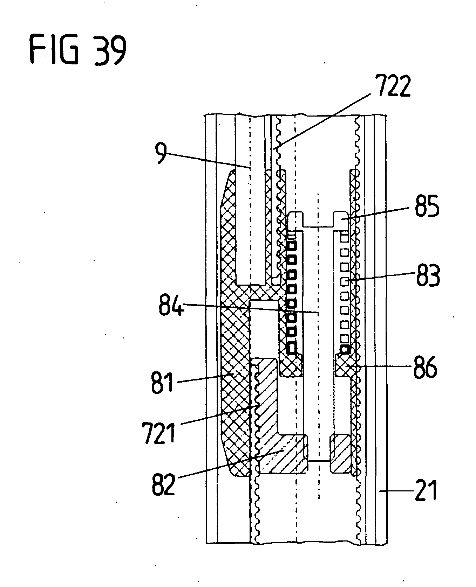

Fig. 38 zeigt in vergrößerter perspektivischer Darstellung und Fig. 39 in einem Längsschnitt den im unteren Führungsrohr 21 geführten Mitnehmer 80 zur Verbindung des Zahnriemens 72 mit dem Schubelement 9. Der Zahnriemen 72 weist eine offene Riemenausführung auf, dessen Enden 721, 722 im Mitnehmer 80 zusammengeführt sind und mit ihrer Verzahnung formschlüssig mit der Gegenverzahnung des Mitnehmers 80 verbunden sind. Zur Längenkompensation des Zahnriemens 72 bei sich verändernden Zahnriemenlängen infolge der auf den Zahnriemen ,72 ausgeübten Zugspannungen dient eine in das Mitnehmergehäuse 81 integrierte Längenkompensationseinrichtung, die einen mit dem einen Ende 721 des Zahnriemens verbundenen und in Längsrichtung gleitend im Mitnehmergehäuse 81 geführten Mitnehmerschlitten 82, einen mit dem Mitnehmerschlitten 82 verbundenen Federbolzen 84 und eine zwischen einer Federabstützung 86 am Mitnehmergehäuse 81 und dem Federbolzenkopf 85 angeordnete Druckfeder 83 enthält. Die von der Druckfeder 83 auf den Federbolzenkopf 85 und die Federabstützung 86 ausgeübte Druckkraft ist bestrebt, den Mitnehmerschlitten 82 mit dem im Mitnehmerschlitten 82 eingespannten einen Ende 721 des Zahnriemens 72 zum anderen Ende 722 des Zahnriemens 72 zu bewegen, das ebenfalls über eine Gegenverzahnung formschlüssig mit dem Mitnehmergehäuse 81 verbunden ist.

Zur Verbindung des Schubelements 9 mit dem Mitnehmer 80 dient eine Halterung 87, die als Form- oder Kraftschlussverbindung ausgebildet ist.

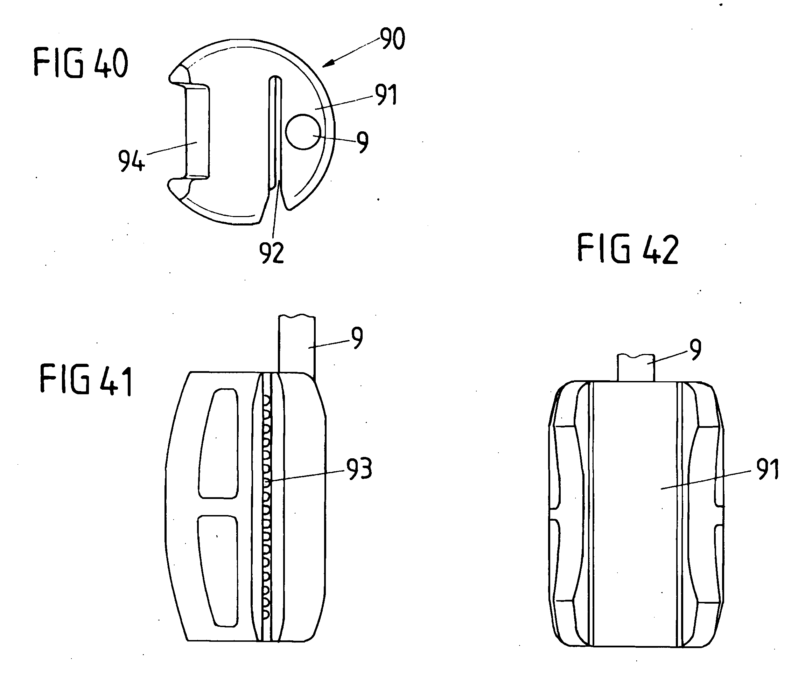

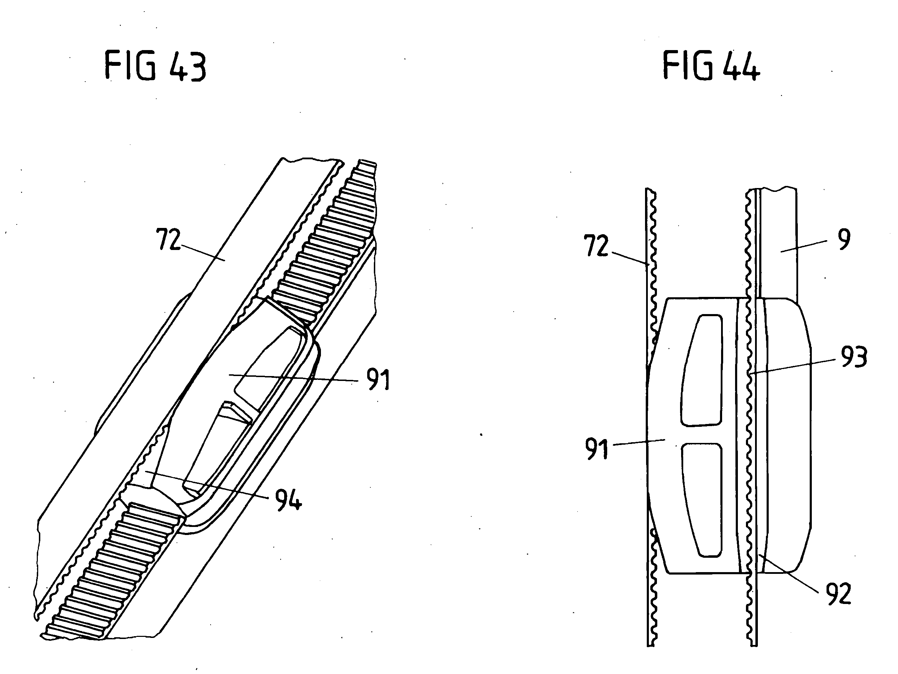

Zur Verbindung eines Zahnriemens 72 in geschlossener Riemenausführung mit dem Schubelement 9 ist in den Fig. 40 bis 44 ein Mitnehmer 90 dargestellt, der in einem Mitnehmergehäuse 91 einen Zahnriemen-Aufnahmeschlitz 92 mit einer darin ausgebildeten Gegenverzahnung 93 als Gegen-Formschlusselemente zu den Formschlusselementen des Zahnriemens 72 und eine Bohrung zur Aufnahme des zylindrischen Schubelements 9 aufweist. Eine Ausnehmung 94 ist parallel zum Zahnriemen-Aufnahmeschlitz 92 ausgerichtet und dient der Führung bzw. dem Platz sparenden Vorbeiführen des Gegenstrangs des Zahnriemens 72 am Mitnehmer 90.

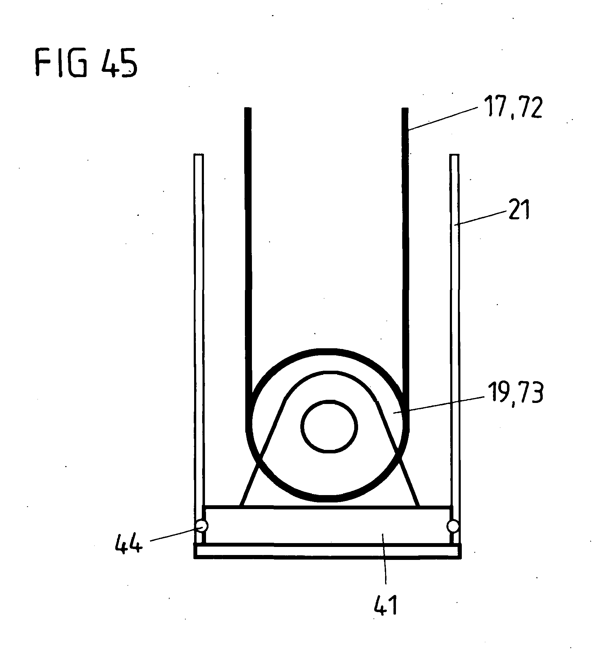

In Fig. 45 ist in schematischer Schnittdarstellung das untere Ende der ersten oder zweiten Verstelleinrichtung 10, 10' im Bereich der Umlenkeinrichtung für das flexible Zugmittel dargestellt, die entweder als Rolloseilumlenkung 19 für ein Rolloseil 17, als Keilrolle für einen Keilriemen oder als Umlenkrolle 73 für einen Zahnriemen 72, einen Lochriemen oder eine Kette ausgebildet ist. Zum staub- und wasserdichten Abschluss des unteren Führungsrohres 21 ist ein Verschlussdeckel 41 vorgesehen, der zusätzlich über eine O-Ring-Dichtung 44 gegenüber dem Ende des unteren Führungsrohres 21 abgedichtet ist.

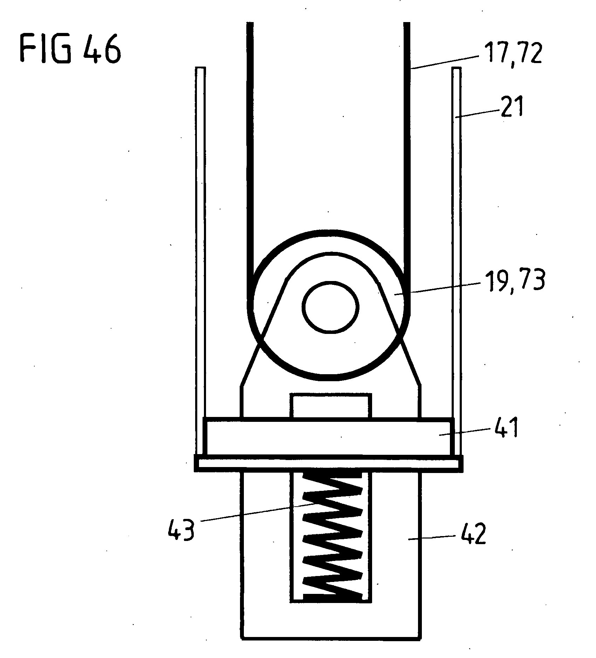

Um auch bei einer Abdichtung des unteren Führungsrohres 21 mit einem Verschlussdeckel 41 gemäß Fig. 45 und unabhängig von der Ausführungsform des flexiblen Zugmittels in offener oder geschlossener Ausführung eine Längenkompensation des flexiblen Zugmittels zu gewährleisten, ist in Fig. 46 in einem schematischen Längsschnitt durch das untere Ende der Verstelleinrichtung 10 bzw. 10' eine Zugmittel-Spannvorrichtung dargestellt, die aus einem mit der Zugmittelumlenkung 19, 73 verbundenen und sich über eine Spannfeder 43 am Verschlussdeckel 41 abstützenden Spannhebel 4) besteht.

### Bezugszeichenliste

- 1: Kraftfahrzeugtür
- 2: Türschacht
- 3: Türausschnitt
- 4: Fensterscheibe
- 5: Rollo
- 6: Rollobehang
- 7: Wickelwelle
- 8: Rollozugstab
- 9: Schubelement
- 10, 10': Verstelleinrichtung
- 11: Rolloantrieb
- 12: Elektromotor
- 13: Getriebe
- 14: Rolloseiltrommel
- 15: Antriebselektronik
- 16: Stecker
- 17: Rolloseil
- 18, 80, 90: Rollo-Mitnehmer
- 19: Rolloseilumlenkung
- 20: Führungskanal
- 21: Unteres Führungsrohr
- 22: Oberes Führungsrohr
- 23: Antriebsgehäuse / Kopfteil
- 24: Seilumlenkgehäuse
- 25, 26: Befestigungsstellen
- 240: Befestigungsbohrung
- 27: Türinnenblech
- 28: Schachtverstärkung
- 29: Dichtfolie
- 30: Fensterheber
- 31: Fensterheberantrieb
- 32: Fensterheberseil
- 33: Fensterheber-Mitnehmer
- 34: Obere Fensterheber-Seilumlenkung
- 35: Untere Fensterheber-Seilumlenkung
- 36: Führungsschiene
- 40: Wasserdichte Rohrdurchführung
- 41: Verschlussdeckel
- 42: Spannhebel
- 43: Spannfeder
- 44: O-Ring-Dichtung
- 50: Gemeinsamer Elektromotor
- 51: Umschaltgetriebe
- 52: Antriebswelle
- 60: Bowden
- 71: Antriebsritzel
- 72: Zahnriemen
- 73: Umlenkrolle
- 74: Umlenkrollengehäuse
- 75: Befestigungsbohrung
- 81,91: Mitnehmergehäuse
- 82: Mitnehmerschlitten
- 83: Druckfeder
- 84: Federbolzen
- 85: Federbolzenkopf
- 86: Federabstützung
- 87: Halterung
- 91: Mitnehmergehäuse
- 92: Zahnriemen-Aufnahmeschlitz
- 93: Gegenverzahnung
- 94: Ausnehmung
- 130: Antriebsschnecke
- 141: Seilrille
- 142: Schneckenverzahnung
- 171, 172: Seilzüge
- 201,202: Stege oder Rippen
- 203: Vorderwand
- 204, 205: Seitenwände
- 210: Abdeckung
- 220: Kappe
- 230: Antriebsgehäusedeckel
- 231, 232: Dichtende Steckaufnahme
- 310: Elektromotor
- 311: Getriebe
- 312: Fensterheber-Seiltrommel
- 313: Stecker
- 321,322: Seilstränge
- 323: Seilnippel
- 330: Führungsabschnitt
- 331,332: Mitnehmerbacken
- 333: Seilnippelaufnahme
- 721, 722: Zahnriemenenden
- T: Trockenraum
- N: Nassraum

## Patentansprüche

1. Fahrzeugrollo, insbesondere Sonnenschutzrollo für Kraftfahrzeuge, mit einem Rollobehang (6), der mit einem druck- und/oder biegesteifen Schubelement (9) zum Aufspannen des Rollobehangs (6) verbunden ist und mit einer das Schubelement (9) betätigenden Verstelleinrichtung (10), die nach Art eines einsträngigen Seilfensterhebers ausgebildet und zusammen mit dem Schubelement (9) zumindest teilweise gekapselt ist,
**dadurch gekennzeichnet,**
**dass** das Schubelement (9) und die Verstelleinrichtung (10) in einem das Schubelement (9) und die Verstelleinrichtung (10) aufnehmenden Gehäuse (20 bis 24) angeordnet sind, das ein Antriebsgehäuse (23) für den Rolloantrieb (11) und einen vorzugsweise rohrförmigen Führungskanal (20; 21) enthält, der das Schubelement (9) und das flexible Zugmittel aufnimmt.

2. Rollo nach Anspruch 1, **dadurch gekennzeichnet, dass** die Verstelleinrichtung (10) ein flexibles Zugmittel (17, 72) zur Kraftübertragung auf das Schubelement (9), ein mit einem Rolloantrieb (11) verbundenes Zugmittel-Antriebselement (14, 71), das das flexible Zugmittel (17, 72) in einer das Anheben oder Absenken des Schubelements (9) bewirkenden Richtung verstellt und eine Zugmittelumlenkung (19, 73) an mindestens einem Ende des Verstellweges des Schubelements (9) enthält, auf dem ein Abschnitt des flexiblen Zugmittels (17, 72) geführt ist.

3. Rollo nach Anspruch 1 oder 2, **dadurch gekennzeichnet, dass** das Gehäuse (20 bis 24) die Verstelleinrichtung (10) und das Schubelement (9) staub- und feuchtigkeitsdicht abschottet.

4. Rollo nach mindestens einem der vorangehenden Ansprüche, **gekennzeichnet durch** einen zumindest über einen Teil seines Umfangs und seiner Länge offenen, vorzugsweise geschlitzten, Führungskanal (20; 21, 22).

5. Rollo nach mindestens einem der vorangehenden Ansprüche, **dadurch gekennzeichnet, dass** das Antriebsgehäuse (23) das Zugmittel-Antriebselement (14, 71) enthält und die Zugmittelumlenkung (19, 73) in einem Zugmittel-Umlenkgehäuse (24, 74) angeordnet ist.

6. Rollo nach mindestens einem der vorangehenden Ansprüche, **gekennzeichnet durch** eine feuchtigkeits- und staubdichte, vorzugsweise als Steckverbindung ausgebildete, Verbindung des Antriebsgehäuses (23) und des Zugmittel-Umlenkgehäuses (24, 74) mit dem Führungskanal (20; 21, 22).

7. Rollo nach mindestens einem der vorangehenden Ansprüche, **dadurch gekennzeichnet, dass** die Zugmittelumlenkung (19, 73) im Führungskanal (20; 21) angeordnet ist.

8. Rollo nach mindestens einem der vorangehenden Ansprüche, **dadurch gekennzeichnet, dass** das flexible Zugmittel (17, 72) und das Schubelement (9) mit einem senkrecht zu seiner Bewegungsrichtung formschlüssig im Führungskanal (20; 21) geführten Rollo-Mitnehmer (18; 80, 90) verbunden sind, der eine Einrichtung (81 - 86) zum Nachstellen des flexiblen Zugmittels (72) enthält, die aus zwei gegeneinander in der Bewegungsrichtung des Rollo-Mitnehmers (80) verstellbaren Mitnehmerelementen (81, 82) besteht, die jeweils mit einem Ende (721, 722) des flexiblen Zugmittels (72) verbunden sind.

9. Rollo nach mindestens einem der vorangehenden Ansprüche, **dadurch gekennzeichnet, dass** das Zugmittel-Antriebselement (14, 71) und/oder die Zugmittelumlenkung (19, 73) über eine Zugmittel-Spannvorrichtung (42, 43) mit dem Führungskanal (20; 21) verbunden ist bzw. sind, wobei die Zugmittel-Spannvorrichtung (42, 43) aus einem mit der Zugmittelumlenkung (19, 73) verbundenen und sich über eine Spannfeder (43) am Verschlussdeckel (41) abstützenden Spannhebel (42) besteht.

10. Rollo nach mindestens einem der vorangehenden Ansprüche, **dadurch gekennzeichnet, dass** der Rollo-Mitnehmer (90) Formschlusselemente (93) aufweist, die mit Gegen-Formschlusselemente des flexiblen Zugmittels (72) verbunden sind.

11. Rollo nach mindestens einem der vorangehenden Ansprüche, **dadurch gekennzeichnet, dass** der Führungskanal (20; 21, 22) von einer mit der Fahrzeugkarosserie (1) verbundenen unteren Anlenkung bis zu einer Nass/Trockenraumtrennung der Fahrzeugkarosserie (1) verläuft.

12. Rollo nach mindestens einem der vorangehenden Ansprüche, **dadurch gekennzeichnet, dass** der Führungskanal (20; 21, 22) aus einem das Schubelement (9) aufnehmenden oberen Führungsrohr (22), das vom Antriebsgehäuse (23) oder der Zugmittelumlenkung (19, 73) bis zur Nass/Trockenraumtrennung der Fahrzeugkarosserie (1) verläuft, und einem das Schubelement (9), den Rollo-Mitnehmer (18; 80, 90) und das flexible Zugmittel (17, 72) aufnehmenden unteren Führungsrohr (21) besteht, das vom Antriebsgehäuse (23) oder der Zugmittelumlenkung (19, 73) bis zur unteren Anlenkung der Verstelleinrichtung (10) an der Fahrzeugkarosserie (1) verläuft.

13. Rollo nach mindestens einem der vorangehenden Ansprüche, **gekennzeichnet durch** die Integration von Teilen eines in einer Fahrzeugtür (1) angeordneten Fensterhebers (30) in Teile der Verstelleinrichtung (10) des Rollos (5).

14. Rollo nach Anspruch 13, **dadurch gekennzeichnet, dass** das untere Führungsrohr (21) einteilig mit einer Führungsschiene (40) des Fensterhebers (30) verbunden ist oder dass das untere Führungsrohr (21) einteilig mit einer Führungschiene (40) des Fensterhebers (30) verbunden und als Führungsschiene des Fensterhebers (30) ausgebildet ist und dass der Fensterheber-Mitnehmer (33) an der Außenkontur des unteren Führungsrohres (21) geführt ist.

15. Rollo nach Anspruch 13, **dadurch gekennzeichnet, dass** das untere Führungsrohr (21) und die Führungsschiene (40) des Fensterhebers (30) zweiteilig ausgebildet und parallel zueinander verlaufend nebeneinander angeordnet sind.

16. Rollo nach Anspruch 13, **dadurch gekennzeichnet, dass** die Verstelleinrichtung (10) des Rollos (5) und der Fensterheber (30) gemeinsame Umlenkeinrichtungen aufweisen.

17. Rollo nach mindestens einem der vorangehenden Ansprüche 13 bis 16, **dadurch gekennzeichnet, dass** der Fensterheberantrieb (31) am unteren Ende des mit seiner Außenkontur als Führungsschiene dienenden Führungskanals (20) angeordnet ist, dass eine Fensterheber-Seiltrommel (312) die untere Umlenkung für das Fensterheberseil (32) bildet und dass eine obere Fensterheber-Seilumlenkung (34) entweder als Teil des Rolloantriebs (11) ausgebildet oder in das Antriebsgehäuse (23) des Rolloantriebs (11) eingesteckt ist.

18. Rollo nach mindestens einem der vorangehenden Ansprüche 13 bis 16, **dadurch gekennzeichnet, dass** die Fensterheber-Seiltrommel (312) die obere Fensterheber-Seilumlenkung (34) bildet und dass der Elektromotor (310) des Fensterheberantriebs (31) zum unteren Ende des Führungskanals (20) bzw. unteren Führungsrohrs (21) ausgerichtet ist.

19. Rollo nach mindestens einem der vorangehenden Ansprüche, **gekennzeichnet durch** einen gemeinsamen Elektromotor (50) für die Verstelleinrichtung (10) des Rollos (5) und für den Fensterheber (30) mit einem zum Antrieb einer Fensterheber-Seiltrommel (312) und/oder der Verstelleinrichtung (10) des Rollos (5) umschaltbaren Umschaltgetriebe (51).

20. Rollo nach mindestens einem der vorangehenden Ansprüche, **dadurch gekennzeichnet, dass** im unteren Führungsrohr (21) in dessen Längsrichtung verlaufende Stege oder Rippen (201, 202) angeordnet sind, die das Schubelement (9) von den Seilsträngen (171, 172) des Rolloseils (17) trennen und einen Teil der formschlüssigen Führung des Rollo-Mitnehmers (18) ausbilden.

21. Rollo nach mindestens einem der vorangehenden Ansprüche, **dadurch gekennzeichnet, dass** das flexible Zugmittel aus einem Zahnriemen (72), Lochriemen, Reibriemen, insbesondere einem Keilriemen, oder einer Kette, insbesondere einer Glieder- oder Kugelkette, besteht.

22. Rollo nach Anspruch 21, **dadurch gekennzeichnet, dass** der Rolloantrieb (11) einen mit einer Antriebselektronik (15) verbundenen Elektromotor (12) und ein Getriebe (13) mit einer Antriebswelle (52) aufweist, die mit einem als Antriebsritzel (71) ausgebildeten Zugmittel-Antriebselement mit Formschlusselementen verbunden ist, die in die Gegen-Formschlusselemente des als Zahnriemen (72), Lochriemen, Reibriemen oder Kette ausgebildeten flexiblen Zugmittels eingreifen.

## Claims

1. Vehicle roller blind, in particular sunshield roller blind for motor vehicles, having a roller blind web (6) which is connected to a thrust element (9), which is rigid in compression and/or bending-resistant, for tensioning the roller blind web (6), and having an adjusting device (10) which actuates the thrust element (9), which is embodied in the manner of a single-stranded cable window lifter and which is at least partially encapsulated together with the thrust element (9),
**characterized in**
**that** the thrust element (9) and the adjusting device (10) are arranged in a housing (20 to 24) which holds the thrust element (9) and the adjusting device (10) and which comprises a drive housing (23) for the roller blind drive (11) and a preferably tubular guide channel (20; 21) which holds the thrust element (9) and the flexible traction means.

2. Roller blind as claimed in claim 1, **characterized in that** the adjusting device (10) comprises a flexible traction means (17, 72) for transmitting force to the thrust element (9), a traction means drive element (14, 71) which is connected to a roller blind drive (11) and which adjusts the flexible traction means (17, 72) in a direction which causes the thrust element (9) to be raised or lowered, and a traction means deflector (19, 73) at at least one end of the adjustment path of the thrust element (9), on which traction means deflector (19, 73) a section of the flexible traction means (17, 72) is guided.

3. Roller blind as claimed in claim 1 or 2, **characterized in that** the housing (20 to 24) seals off the adjusting device (10) and the thrust element (9) in a dust- and moisture-tight fashion.

4. Roller blind as claimed in at least one of the preceding claims, **characterized by** a guide channel (20; 21, 22) which is open, preferably slotted, at least over a part of its periphery and its length. '

5. Roller blind as claimed in at least one of the preceding claims, **characterized in that** the drive housing (23) comprises the traction means drive element (14, 71) and the traction means deflector (19, 73) is arranged in a traction means deflector housing (24, 74).

6. Roller blind as claimed in at least one of the preceding claims, **characterized by** a moisture- and dust-tight connection, preferably embodied as a plug-type connection, of the drive housing (23) and of the traction means deflector housing (24, 74) to the guide channel (20; 21, 22).

7. Roller blind as claimed in at least one of the preceding claims, **characterized in that** the traction means deflector (19, 73) is arranged in the guide channel (20; 21).

8. Roller blind as claimed in at least one of the preceding claims, **characterized in that** the flexible traction means (17, 72) and the thrust element (9) are connected to a roller blind driver (18; 80, 90) which is guided in the guide channel (20; 21) with a positive fit perpendicularly with respect to its movement direction, which roller blind driver (18; 80, 90) comprises a device (81 - 86) for adjusting the flexible traction means (72), which device (81 - 86) is composed of two driver elements (81, 82) which are adjustable counter to one another in the movement direction of the roller blind driver (80) and which are connected to in each case one end (721, 722) of the flexible traction means (72).

9. Roller blind as claimed in at least one of the preceding claims, **characterized in that** the traction means drive element (14, 71) and/or the traction means deflector (19, 73) are/is connected by means of a traction means tensioning device (42, 43) to the guide channel (20; 21), with the traction means tensioning device (42, 43) being composed of a tensioning lever (42) which is connected to the traction means deflector (19, 73) and which is supported on the closure cover (41) via a tensioning spring (43).

10. Roller blind as claimed in at least one of the preceding claims, **characterized in that** the roller blind driver (90) has positive-fit elements (93) which are connected to mating positive-fit elements of the flexible traction means (72).

11. Roller blind as claimed in at least one of the preceding claims, **characterized in that** the guide channel (20; 21, 22) runs from a lower articulation, which is connected to the vehicle body (1), to a wet/dry space partition of the vehicle body (1).

12. Roller blind as claimed in at least one of the preceding claims, **characterized in that** the guide channel (20; 21, 22) is composed of an upper guide tube (22) which holds the thrust element (9) and which runs from the drive housing (23) or the traction means deflector (19, 73) to the wet/dry space partition of the vehicle body (1), and a lower guide tube (21) which holds the thrust element (9), the roller blind driver (18; 80, 90) and the flexible traction means (17, 72) and which runs from the drive housing (23) or the traction means deflector (19, 73) to the lower articulation of the adjusting device (10) to the vehicle body (1).

13. Roller blind as claimed in at least one of the preceding claims, **characterized by** the integration of parts of a window lifter (30), which is arranged in a vehicle door (1), into parts of the adjusting device (10) of the roller blind (5).

14. Roller blind as claimed in claim 13, **characterized in that** the lower guide tube (21) is integrally connected to a guide rail (40) of the window lifter (30), or that the lower guide tube (21) is integrally connected to a guide rail (40) of the window lifter (30) and is embodied as a guide rail of the window lifter (30) and **in that** the window lifter driver (33) is guided on the outer contour of the lower guide tube (21).

15. Roller blind as claimed in claim 13, **characterized in that** the lower guide tube (21) and the guide rail (40) of the window lifter (30) are formed in two parts and are arranged adjacent to one another so as to run parallel to one another.

16. Roller blind as claimed in claim 13, **characterized in that** the adjusting device (10) of the roller blind (5) and the window lifter (30) have common deflecting devices.

17. Roller blind as claimed in at least one of the preceding claims 13 to 16, **characterized in that** the window lifter drive (31) is arranged at the lower end of the guide channel (20) which, with its outer contour, serves as a guide rail, **in that** a window lifter cable drum (312) forms the lower deflector for the window lifter cable (32), and **in that** an upper window lifter cable deflector (34) is either formed as a part of the roller blind drive (11) or is plugged into the drive housing (23) of the roller blind drive (11).

18. Roller blind as claimed in at least one of the preceding claims 13 to 16, **characterized in that** the window lifter cable drum (312) forms the upper window lifter cable deflector (34) and **in that** the electric motor (310) of the window lifter drive (31) is aligned toward the lower end of the guide channel (20) or lower guide tube (21).

19. Roller blind as claimed in at least one of the preceding claims, **characterized by** a common electric motor (50) for the adjusting device (10) of the roller blind (5) and for the window lifter (30), with a switchover gearing (51) which can be switched over for driving a window lifter cable drum (312) and/or the adjusting device (10) of the roller blind (5).

20. Roller blind as claimed in at least one of the preceding claims, **characterized in that** webs or ribs (201, 202) are arranged in the lower guide tube (21), which webs or ribs (201, 202) run in the longitudinal direction of said lower guide tube (21) and separate the thrust element (9) from the cable strands (171, 172) of the roller blind cable (17) and form a part of the positive-fit guide of the roller blind driver (18).

21. Roller blind as claimed in at least one of the preceding claims, **characterized in that** the flexible traction means is composed of a toothed belt (72), punched belt, friction belt, in particular a V-belt, or a chain, in particular a link chain or bead chain.

22. Roller blind as claimed in claim 21, **characterized in that** the roller blind drive (11) has an electric motor (12), which is connected to drive electronics (15), and a gearing (13) with a driveshaft (52) which is connected to a traction means drive element, embodied as a drive pinion (71), with positive-fit elements which engage into the mating positive-fit elements of the flexible traction means which is embodied as a toothed belt (72), punched belt, friction belt or chain.

## Revendications

1. Store déroulant pour véhicules, en particulier store déroulant de protection solaire pour véhicules automobiles, comprenant une tenture de store (6) qui est reliée à un élément de poussée (9) rigide à la pression et/ou à la flexion pour tendre la tenture de store (6), et comprenant un dispositif de déplacement (10) qui actionne l'élément de poussée (9), qui est réalisé à la manière d'un lève-vitres Bowden à un seul brin et qui est au moins partiellement encapsulé avec l'élément de poussée (9),
**caractérisé en ce que**
l'élément de poussée (9) et le dispositif de déplacement (10) sont agencés dans un boîtier (20 à 24) qui reçoit l'élément de poussée (9) et le dispositif de déplacement (10) et qui contient un boîtier d'entraînement (23) pour l'entraînement de store (11) et un canal de guidage (20 ; 21) de préférence tubulaire, qui reçoit l'élément de poussée (9) et l'organe de traction flexible.

2. Store déroulant selon la revendication 1, **caractérisé en ce que** le dispositif de déplacement (10) comprend un organe de traction flexible (17, 72) pour la transmission de forces à l'élément de poussée (9), un élément d'entraînement d'organe de traction (14, 71) relié à un entraînement de store (11), élément qui déplace l'organe de traction flexible (17, 72) dans une direction qui provoque le soulèvement ou l'abaissement de l'élément de poussée (9) et un renvoi d'organe de traction (19, 73) à au moins une extrémité du trajet de déplacement de l'élément de poussée (9), renvoi sur lequel un tronçon de l'organe de traction flexible (17, 72) est guidé.

3. Store déroulant selon la revendication 1 ou 2, **caractérisé en ce que** le boîtier (20 à 24) abrite le dispositif de déplacement (10) et l'élément de poussée (9) de manière étanche vis-à-vis des poussières et vis-à-vis de l'humidité.

4. Store déroulant selon l'une au moins des revendications précédentes, **caractérisé par** un canal de guidage (20 ; 21, 22) ouvert, de préférence fendu, au moins sur une partie de sa périphérie et de sa longueur.

5. Store déroulant selon l'une au moins des revendications précédentes, **caractérisé en ce que** le boîtier d'entraînement (23) contient l'élément d'entraînement pour organe de traction (14, 71), et le renvoi pour l'organe de traction (19, 73) est agencé dans un boîtier (24, 74) pour le renvoi pour l'organe de traction.

6. Store déroulant selon l'une au moins des revendications précédentes, **caractérisé par** une jonction du boîtier d'entraînement (23) et du boîtier (24, 74) pour le renvoi pour l'organe de traction avec le canal de guidage (20 ; 21, 22) réalisée de manière étanche vis-à-vis de l'humidité et vis-à-vis des poussières, de préférence sous forme d'une jonction à enfichage.

7. Store déroulant selon l'une au moins des revendications précédentes, **caractérisé en ce que** le renvoi pour l'organe de traction (19, 73) est agencé dans le canal de guidage (20 ; 21).

8. Store déroulant selon l'une au moins des revendications précédentes, **caractérisé en ce que** l'organe de traction flexible (17, 72) et l'élément de poussée (9) sont reliés avec un élément d'entraînement de store (18 ; 80, 90) guidé en coopération de formes dans le canal de guidage (20 ; 21) perpendiculairement à sa direction de déplacement, élément d'entraînement qui contient un système (81-86) pour réajuster l'organe de traction flexible (72), constitué par deux éléments d'entraînement (81, 82) déplaçables à l'encontre l'un de l'autre dans la direction de déplacement de l'élément d'entraînement de store (80), lesquels sont reliés respectivement à une extrémité (721, 722) de l'organe de traction flexible (72).

9. Store déroulant selon l'une au moins des revendications précédentes, **caractérisé en ce que** l'élément d'entraînement (14, 71) pour l'organe de traction et/ou le renvoi (19, 73) pour l'organe de traction est(sont) relié(s) avec le canal de guidage (20 ; 21) via un dispositif de tensionnement (42, 43) pour l'organe de traction, ledit dispositif de tensionnement (42, 43) pour l'organe de traction étant formé par un levier de tensionnement (42) relié au renvoi (19, 73) pour l'organe de traction et soutenu sur le couvercle de fermeture (41) via un ressort de tensionnement (43).

10. Store déroulant selon l'une au moins des revendications précédentes, **caractérisé en ce que** l'élément d'entraînement de store (90) comprend des éléments à coopération de formes (93) qui sont reliés à des éléments antagonistes à coopération de formes de l'organe de traction flexible (72).

11. Store déroulant selon l'une au moins des revendications précédentes, **caractérisé en ce que** le canal de guidage (20 ; 21, 22) s'étend depuis une articulation inférieure reliée à la carrosserie (1) du véhicule jusqu'à une séparation espace sec/espace humide de la carrosserie (1) du véhicule.

12. Store déroulant selon l'une au moins des revendications précédentes, **caractérisé en ce que** le canal de guidage (20 ; 21, 22) est constitué d'un tube de guidage supérieur (22) qui reçoit l'élément de poussée (9) et qui s'étend depuis le boîtier d'entraînement (23) ou depuis le renvoi (19, 73) pour l'organe de traction jusqu'à la séparation espace sec/espace humide de la carrosserie (1) du véhicule, et d'un tube de guidage inférieur (21) qui reçoit l'élément de poussée (9), l'élément d'entraînement de store (18 ; 80, 90) et l'organe de traction flexible (17, 72), le tube de guidage inférieur (21) s'étendant depuis le boîtier d'entraînement (23) ou depuis le renvoi (19, 73) pour l'organe de traction jusqu'à l'articulation inférieure du dispositif de déplacement (10) sur la carrosserie (1) du véhicule.

13. Store déroulant selon l'une au moins des revendications précédentes, **caractérisé par** l'intégration de pièces d'un lève-vitre (30) agencé dans une porte de véhicule (1) dans des pièces du dispositif de déplacement (10) du store déroulant (5).

14. Store déroulant selon la revendication 13, **caractérisé en ce que** le tube de guidage inférieur (21) est relié d'une seule pièce avec un rail de guidage (40) du lève-vitre (30) ou **en ce que** le tube de guidage inférieur (21) est relié d'une seule pièce avec un rail de guidage (40) du lève-vitre (30) et à titre de rail de guidage du lève-vitre (30), et **en ce que** l'élément d'entraînement (33) du lève-vitre est guidé sur le contour extérieur du tube de guidage inférieur (21).

15. Store déroulant selon la revendication 13, **caractérisé en ce que** le tube de guidage inférieur (21) et le rail de guidage (40) du lève-vitre (30) sont réalisés en deux pièces et agencés l'un à côté de l'autre et parallèlement l'un à l'autre.

16. Store déroulant selon la revendication 13, **caractérisé en ce que** le dispositif de déplacement (10) du store déroulant (5) et le lève-vitre (30) comprennent des dispositifs de renvoi communs.

17. Store déroulant selon l'une au moins des revendications précédentes 13 à 16, **caractérisé en ce que** l'entraînement (31) du lève-vitre est agencé à l'extrémité inférieure du canal de guidage (20) servant de rail de guidage par son contour extérieur, **en ce qu'**un tambour à câble (312) du lève-vitre forme le renvoi inférieur pour le câble (32) du lève-vitre, et **en ce qu'**un renvoi de câble supérieur (34) pour le lève-vitre est réalisé soit comme partie de l'entraînement de store (11) soit enfiché dans le boîtier d'entraînement (23) de l'entraînement de store (11).

18. Store déroulant selon l'une au moins des revendications 13 à 16, **caractérisé en ce que** le tambour à câble (312) du lève-vitre forme le renvoi de câble supérieur (34) pour le lève-vitre, et **en ce que** le moteur électrique (310) de l'entraînement (31) du lève-vitre est orienté vers l'extrémité inférieure du canal de guidage (20) ou respectivement le tube de guidage inférieur (21).

19. Store déroulant selon l'une au moins des revendications précédentes, **caractérisé par** un moteur électrique commun pour le dispositif de déplacement (10) du store déroulant (5) et pour le lève-vitre (30), avec un mécanisme à inversion (51) susceptible d'être inversé pour l'entraînement d'un tambour à câble (312) du lève-vitre et/ou pour le dispositif de déplacement (10) du store déroulant (5).

20. Store déroulant selon l'une au moins des revendications précédentes, **caractérisé en ce que** des barrettes ou des nervures (201, 202) sont agencées dans le tube de guidage inférieur (21) en s'étendant dans sa direction longitudinale, qui séparent l'élément de poussée (9) vis-à-vis des brins de câbles (171, 172) du câble de store (17), et qui forment une partie du guidage à coopération de formes de l'élément d'entraînement du store (18).

21. Store déroulant selon l'une au moins des revendications précédentes, **caractérisé en ce que** l'organe de traction flexible est formé par une courroie dentée (72), une courroie à trous, une courroie de friction, en particulier une courroie à section conique, ou encore une chaîne, en particulier une chaîne à maillons ou une chaîne à billes.

22. Store déroulant selon la revendication 21, **caractérisé en ce que** l'entraînement de store (11) comprend un moteur électrique (12) en liaison avec une électronique d'entraînement (15), et une boîte de vitesses (13) avec un arbre d'entraînement (52), lequel est relié avec des éléments à coopération de formes pour donner un élément d'entraînement d'organe de traction réalisé sous forme de pignon d'entraînement (71), qui s'engage dans les éléments antagonistes à coopération de formes de l'organe de traction réalisé sous forme de courroie dentée (72), de courroie à trous, de courroie de friction ou de chaîne.
